# EUROPEAN PATENT SPECIFICATION

(11) **EP 4 186 254 B1**
(45) Date of publication and mention of the grant of the patent: **13.12.2023**
(21) Application number: 21751645.9
(22) Date of filing: 20.07.2021
(51) Int. Cl.: H04W 4/70, H04L 9/32, H04W 12/06, H04W 56/00, H04L 9/06, H04L 9/12

(54) **SYNCHRONISATION OF A DEVICE FOR AUTHENTICATION**
SYNCHRONISATION EINER VORRICHTUNG ZUR AUTHENTIFIZIERUNG
SYNCHRONISATION D'UN DISPOSITIF POUR L'AUTHENTIFICATION

(30) Priority: 24.07.2020 GB 202011505
(43) Date of publication of application: 31.05.2023
(73) Proprietor: Essence Security International (E.S.I.) Ltd., 4672530 Herzlia Pituach (IL)
(72) Inventor: BEN SHLOOSH, Koby, 4934640 Petah-Tikva (IL); AMIR, Ohad, 4642300 Herzlia (IL)
(74) Representative: Murgitroyd & Company
(86) International application number: PCT/IL2021/050883
(87) International publication number: WO 2022/018727

(56) References cited:
- EP-A1- 2 395 404
- WO-A1-2011/072442
- YANG JUN ET AL: "Space Time Protocol Based on IEEE1588", 2015 10TH INTERNATIONAL CONFERENCE ON BROADBAND AND WIRELESS COMPUTING, COMMUNICATION AND APPLICATIONS (BWCCA), IEEE, 4 November 2015 (2015-11-04), pages 359-363, XP032876550, DOI: 10.1109/BWCCA.2015.61

## Description

### FIELD OF THE INVENTION

The present invention relates generally to the synchronization of devices for authentication.

### BACKGROUND INFORMATION

For some applications, such as security systems, it is important to verify that information received by a receiving device originated from an authorized device. A would-be hacker, for example, may record a signal transmitted by an authorized device (e.g. a signal a disarm command) and then attempt to replay that signal at a later time from another device to try to have the same effect (e.g. to disarm the system). Such hacks could also be attempted on smart locks (e.g. the playback being to unlock the lock). Thus, the object of the hack may be a security system control panel (also known as a control hub), or a peripheral device controlled by a control panel, or in the case of a smart lock operated by a wireless key, the object of the hack may be the smart lock.

In such systems it is common for at least the peripheral devices (e.g. a wireless key) to be battery powered. In the case of a smart lock, the smart lock may also be battery powered. Thus, for control panel/hub or smart lock-based systems efficient use of power is critical, in order to provide a long life for the relevant battery/batteries. Further, authentication could be provided by using another device for the performance of a verification, but this adds complexity, cost and a weak point to reliability and may add unacceptable delay.

An article entitled "Space Time Protocol Based on IEEE1588" by Yang Jun et al (2015 10TH INTERNATIONAL CONFERENCE ON BROADBAND AND WIRELESS COMPUTING, COMMUNICATION AND APPLICATIONS (BWCCA), IEEE, (20151104), pages 359 - 363, section III.A) discloses controlling a receiver of a second device to receive a signal from a first device in which the security of the IEEE1588 protocol is increased by a slave clock sending a key ID and a hash value to a master clock for authenticating the slave clock device and performing key negotiation, wherein authentication is based on validating the hash.

### SUMMARY OF THE INVENTION

The present invention provides a second device comprising a receiver; a transmitter; a master clock; and a processor configured to control the receiver to receive a signal from a first device, the signal including a component based on a slave clock of the first device; authenticate the signal by comparing the component with a master signal, the master signal being based on the master clock; if the signal is authenticated, perform an operation based on the signal; and if the signal is not authenticated, perform a further authentication process including controlling the transmitter to transmit a challenge signal to the first device and control the receiver to receive a challenge response from the first device, and if the further authentication process is successful, perform an operation based on either the signal or a further received signal received from the first device; wherein the processor is configured to control the transmitter to transmit a resynchronization signal based on the master clock to the first device for the resynchronization of the slave clock either as at least a part of the challenge signal, or as a further transmitted signal transmitted to the first device.

The present invention also provides a first device comprising a transmitter; a receiver; a slave clock; and a processor configured to upon a first receipt of a triggering-input by the receiver, control the transmitter to transmit a signal to a second device to request that the second device perform an operation, the signal including a component based on the slave clock for authentication of the first device; during a time window, listening for a challenge signal to trigger resynchronization, and if the challenge signal is received by the receiver during the time window, control the transmitter to transmit a challenge response to the second device; controlling the receiver to receive a resynchronization signal based on a master clock of the second device from the second device in response to the challenge response; and resynchronizing the slave clock using the resynchronization signal; wherein the resynchronization signal is received as part of the challenge signal or as a further received signal received from the second device, and wherein either the challenge response includes a component to request the second device to perform an operation, or the transmitter is controlled to transmit a further transmitted signal to the second device including a component to request the second device to perform an operation.

The present invention also provides a method comprising controlling a receiver of a second device to receive a signal from a first device, the signal including a component based on a slave clock of the first device; authenticating the signal by comparing the component with a master signal, the master signal being based on a master clock of the second device; if the signal is authenticated, performing an operation based on the signal; if the signal is not authenticated, performing a further authentication process including controlling a transmitter of the second device to transmit a challenge signal to the first device and controlling the receiver to receive a challenge response from the first device, and if the further authentication process is successful, performing an operation based on either the signal, or a further received signal received from the first device; and controlling the transmitter to transmit a resynchronization signal based on the master clock to the first device for the resynchronization of the slave clock as either at least a part of the challenge signal, or as a further transmitted signal transmitted to the first device.

The present invention further provides a method comprising upon a first receipt of a triggering-input, control a transmitter of a first device to transmit a signal to a second device to request that the second device perform an operation, the signal including a component based on a slave clock of the first device for authentication of the first device; during a time window, listening for a challenge signal to trigger resynchronization, and if the challenge signal is received during the time window, controlling the transmitter to transmit a challenge response to the second device; controlling a receiver of the first device to receive a resynchronization signal based on a master clock of the second device from the second device in response to the challenge response; and resynchronizing the slave clock using the resynchronization signal; wherein the resynchronization signal is received either as part of the challenge signal, or as a further received signal received from the second device, and wherein either the challenge response includes a component to request the second device to perform an operation, or the transmitter is controlled to transmit a further transmitted signal to the second device including a component to request the second device to perform an operation.

### BRIEF DESCRIPTION OF THE SEVERAL VIEWS OF THE DRAWINGS

FIG 1 is a schematic diagram illustrating a system comprising slave devices and a master device in accordance with one or more embodiments;
FIG 2 is a schematic diagram illustrating a signal flow diagram in accordance with a first embodiment;
FIG 3 is a flow diagram illustrating a method of operation of a master device for the resynchronization of the slave clock in accordance with the embodiment of figure 2;
FIG 4 is a flow diagram illustrating a method of operation of a slave device for the resynchronization of the slave clock in accordance with the embodiment of figure 2;
FIG 5 is a schematic diagram illustrating a signal flow diagram in accordance with a second embodiment;
FIG 6 is a flow diagram illustrating a method of operation of a master device for the resynchronization of the slave clock in accordance with the embodiment of figure 5;
FIG 7 is a flow diagram illustrating a method of operation of a slave device for the resynchronization of the slave clock in accordance with the embodiment of figure 5;
FIG 8 is a schematic diagram illustrating a signal flow diagram in accordance with a third embodiment;
FIG 9 is a flow diagram illustrating a method of operation of a master device for the resynchronization of the slave clock in accordance with the embodiment of figure 8;
FIG 10 is a flow diagram illustrating a method of operation of a slave device for the resynchronization of the slave clock in accordance with the embodiment of figure 8;
FIG 11 is a schematic diagram illustrating a signal flow diagram in accordance with a fourth embodiment;
FIG 12 is a flow diagram illustrating a method of operation of a master device for the resynchronization of the slave clock in accordance with the embodiment of figure 11; and
FIG 13 is a flow diagram illustrating a method of operation of a slave device for the resynchronization of the slave clock in accordance with the embodiment of figure 11.

### DETAILED DESCRIPTION

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized, and that structural, logical, and electrical changes may be made without departing from the scope of the inventive subject matter.

The following description is, therefore, not to be taken in a limited sense, and the scope of the inventive subject matter is defined by the appended claims.

In the following embodiments, like components are labelled with like reference numerals.

In the following embodiments, the term data store or memory is intended to encompass any computer readable storage medium and/or device (or collection of data storage mediums and/or devices). Examples of data stores include, but are not limited to, optical disks (e.g., CD-ROM, DVD-ROM, etc.), magnetic disks (e.g., hard disks, floppy disks, etc.), memory circuits (e.g., EEPROM, solid state drives, random-access memory (RAM), etc.), and/or the like. The data store or memory store may be distributed.

The functions or algorithms described herein are implemented in hardware, software or a combination of software and hardware in one embodiment. The software comprises computer executable instructions stored on computer readable carrier media such as memory or other type of storage devices. Further, described functions may correspond to modules, which may be software, hardware, firmware, or any combination thereof. Multiple functions are performed in one or more modules as desired, and the embodiments described are merely examples. The software is executed on a processor. The term "processor" as used herein may a single chip or may be distributed, and may comprise any one or more of: a digital signal processor, ASIC, FPGA, PLC, microprocessor, microcontroller or other type of processing hardware or circuitry.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

Some embodiments are implemented as processor implementable code provided on a carrier medium. The carrier medium can comprise a non-transient storage medium such as solid-state memory, a magnetic disk, optical disk etc., or a transient medium such as a signal transmitted over a computer network.

As used herein, except wherein the context requires otherwise, the terms "comprises", "includes", "has" and grammatical variants of these terms, are not intended to be exhaustive. They are intended to allow for the possibility of further additives, components, integers or steps.

One or more generalized embodiments provides a method and a device, which can be considered a master device, for authenticating communications from a remote device, which can be considered a slave device. In the below discussion of various embodiments, the term master device is used for a device containing the master clock and slave device for a device containing the slave clock. These terms are used for convenience and it is not intended that the term 'master' and 'slave' should impart any other limitations on the devices. In other the places in this specification, such as in the claims, a device including the master clock is termed a second device and a device including a slave clock is termed a first device. It will be appreciated that in some situations, a party may provide a "second device", without providing a "first device", which may be provided by a different party.

The master device has a receiver, a transmitter, a master clock, and a processor. The processor is configured to control the receiver to receive, from the remote device, a signal including a component based on a slave clock of the remote device, and authenticate the signal by comparing the component with a master signal, the master signal being based on the master clock. If the signal is authenticated, an operation is performed based on the signal. If the signal is not authenticated, a further authentication process is performed including controlling the transmitter to transmit a challenge signal to the remote device and control the receiver to receive a challenge response from the remote device, and if the further authentication process is successful, an operation is performed based on the signal or a further received signal received from the remote device. The processor is configured to control the transmitter to transmit a resynchronization signal based on the master clock to the remote device for the resynchronization of the slave clock either as at least a part of the challenge signal, or as a further transmitted signal transmitted to the remote device.

Embodiments solve the problem of a replay attack in which a signal transmitted by a remote device, such as a key fob is recorded by another device and then played back at a later time to try to pretend to be the remote device when authenticating with a master device.

When a slave device is a mobile battery powered device, such as a key fob, it can be taken outside of a communication range of the master device, such as a control hub. The control hub may control a lock or a controller of a door or gate, and/or any other peripheral of a security/alarm system. In embodiments, the master may be a smart lock, or a controller of a door or gate. For example, a person takes the key fob with them when they leave the house and it may be some time before they return to put the slave device within range of the first device. Hence, during that period it is not possible for the master device to transmit resynchronization information to the slave device. Even when the slave device is within range of the master device, in order to conserve battery, it is advantageous not to have to transmit recurring regular resynchronization information to the slave device. Hence, the slave device can lose synchronization with the master device by way of a drift between clocks running on the two devices.

Clocks running on the two devices can be used for authentication by way of an exchange of time-based information. However, this authentication is vulnerable to clock drift. Clock drift is especially prevalent in mobile devices because they are often required to be low cost and hence use low quality clocks. Such low-cost/quality clocks are susceptible to drift relative to a master clock that might be a higher quality/cost clock. Embodiments of the invention avoid the need for accurate, expensive and possibly more power consuming real time clocks in the devices.

Part of the authentication of the signal from the slave device by the master device can be comparing information on the slave clock with information on the master clock and determining whether the slave clock information is within a threshold of the master clock information. The use of some sort of threshold allows for some degree of drift between the slave clock and the master clock before the authentication fails. If the slave device transmits a signal with data for operation on by the master device within a period since a previous signal, such as within a period of 12-24 hours or several days depending on the accuracy of the clocks, the drift in synchronization between the slave clock and the master clock may be within a threshold and hence the slave device is authenticated first time. Hence, during a period in which the drift in synchronization between the slave clock and the master clock with within a threshold, there is no need for resynchronization and a "one-way" process for authentication is provided in such circumstances.

In one or more generalized embodiments, the slave device is authenticated based on a comparison of information based on the slave clock with information based on the master clock of the master device. If the authentication fails, this may be due to the slave device not being an authentic slave device or it may be because of a drift of the slave clock. Hence, a first authentication of the remote device can be based on whether or not the slave clock is synchronized with the master clock to within a predetermined threshold. If the clocks are not closely synchronized, a further authentication step in the form of a challenge sent to the slave device is used to try to gain a valid challenge response from the slave device. A resynchronization signal can be sent to the slave device either as part of the challenge, or as a further transmitted signal transmitted to the remote device after the challenge. This provides for the resynchronization of the slave clock for future communications. Hence, this enables the resynchronization process to be included in the exchange of communications between the slave device and the master device for the request from the slave device to perform an operation, such as unlock/lock a door, process some data, take a picture etc.

The resynchronization signal based on the master clock may be a representation of the master clock e.g. an absolute time or counter value, or it may be a representation of a difference value comprising a difference between the master clock and the slave clock along with a sign or direction indicator to indicate in what direction the slave clock needs to be adjusted.

By using a comparison of the slave clock with the master clock, it is possible to authenticate a slave device. Illegitimate attempts to communicate with the master device will not include information on a time or clock-based signal that matches (within an allowed degree of error) with the time or a clock-based signal of the master device. The degree of error can be a threshold difference that is permitted to allow for a limited degree of drift between the slave clock and the master clock. Once the drift exceeds this, the initial authentication process fails and there is a need to resynchronize the slave clock with the master clock. The further authentication process using the challenge enables this to take place within a single communication exchange or a group of communication exchanges within a short period of time between the slave device and the master device. This period of time can for example be a few seconds or even less than a second, to avoid a user perceiving a long delay in performance of the required operation due to the delay in authentication.

In one or more embodiments, if the signal is authenticated or the further authentication process is successful, the processor is configured to control the transmitter to transmit an acknowledgement signal to the remote device. This avoids the slave device not knowing whether their request for an operation to be performed by the master device has been received and carried out.

In one or more embodiments, the acknowledgement signal includes a resynchronization signal based on the master clock for the resynchronization of the slave clock. Hence, even if the slave device is authenticated, it will receive an updated clock signal enabling the updating of the slave clock. Part of the authentication of the signal from the slave device by the master device can be comparing information on the slave clock with information on the master clock and determining whether the slave clock information is within a threshold of the master clock information. The use of some sort of threshold allows for some degree of drift between the slave clock and the master clock before the authentication fails. Hence, in accordance with this embodiment, if the slave device transmits a signal with data for operation on by the master device regularly, such as within a period of 12-24 hours since a previous signal, it is likely that the drift in synchronization between the slave clock and the master clock with within a threshold and hence the slave device is authenticated first time. The acknowledge signal carrying the resynchronization signal for the slave device enables the slave device to synchronize during this single transmission operation without requiring an additional resynchronization signal transmission. This reduces power consumption.

In one or more embodiments, the challenge signal is included in an acknowledgement signal to the slave device, when the authentication fails.

In one or more embodiments, the processor is configured to control the receiver to receive data from the slave device, and to perform the operation based on the signal using the received data. The received data may be data defining a command to be performed by the master device or a set of data for processing by the master device.

In one or more embodiments, the data is encrypted, and the processor is configured to decrypt the data. The data may be signed with a private key of the slave device and the processor can be configured to perform a data authentication process to authenticate the signing of the data using a public key of the slave device, and/or the data may be encrypted with a public key of the master device and the processor can be configured to decrypt the data using a private key of the master device. This additional authentication process provides a further level of security for the authentication using a digital certificate.

In one or more embodiments, the processor is configured to control the receiver to receive the data in the signal from the slave device. Hence, the signal from the master device used for authentication can also carry the data to avoid the need for further communications. If the slave device is authenticated, the master device can perform the operation using the already received data. If the slave device is not authenticated, either the data can be discarded in favor of data later transmitted to the master device, or the data can be saved to await the further authentication of the slave device.

In one or more embodiments, the processor is configured to control the receiver to receive the data after the challenge response from the slave device, wherein the further received signal is separate to and after the challenge response. Hence, in this embodiment, the authentication request signal is sent initially, and the data sent separately in a later communication after a successful further authentication based on the challenge and challenge response. In one or more embodiments, the later communication is authenticated to avoid a possibility that the further communication has come from an unauthorized source. This authentication can be by way of receipt of the communication within a short, predetermined window of time e.g. 1 second after the further authentication process completion. Alternatively, or in addition, the further received signal received from the slave device includes a component based on the slave clock of the slave device for authentication by comparing the component with the master signal or master clock. Hence, this process is similar to the initial authentication process. In an alternative embodiment, authentication could be based on a shared secret between the master and slave devices. This can be based on the generation and transmission of a random number by the master device, the hashing of the random number and returning of the hashed random number to the master device by the slave device, and the use of the same hash by the master device to recover the random number and compare it with the generated random number for authentication. In this example the shared secret is the hashing algorithm. An alternative shared secret could be any calculation or equation performed by each device on a random number generated by the master device or a clock signal e.g. the master clock signal.

In one or more embodiments, the processor is configured to control the receiver to receive the data in the challenge response, wherein the challenge response comprises the further received signal. Hence, in this embodiment, the need for a further communication is avoided by including the data in the challenge response. If the challenge is successful, the master device can use the data received in the challenge for the performance of the operation.

In one or more embodiments, if the further authentication process is successful, the processor is configured to perform the operation based on either the signal using the data received in the signal from the slave device, the signal using the data received in the further received signal, or the signal using the data received in the challenge signal.

In one or more embodiments, the master signal is unique to the device. This can be because each master device has a unique clock signal based on a particular start time e.g. when the device was started, or a unique start time set in manufacture.

In one or more embodiments, the processor is configured to implement a counter based on the master clock as a basis for the master signal, and to authenticate the signal by comparing a count of the component with a count of the counter based on the master clock, wherein the count of the component comprises a slave count based on a slave clock of the slave device. Hence, a counter, separate to the clock, but running based on the clock, can be used as the basis for the synchronization of the slave and the master devices. Hence, the authentication can be based simply on a comparison of the counter values.

In one or more embodiments, the component from the slave device is encrypted, and the processor is configured to decrypt the component. This provides an additional level of security by preventing access to the slave signal value in the component. The component may be signed with a private key of the slave device and the processor can be configured to authenticate the signing of the component using a public key of the slave device, and/or the component may be encrypted with a public key of the master device and the processor can be configured to decrypt the component using a private key of the master device. Alternatively, the component may be one-way encoded using an encoding scheme, and the processor can be configured to encode the master signal using the same one-way encoding scheme, and to authenticate the signal by comparing the encoded component with the encoded master signal. The one-way encoding scheme may comprise a hashing algorithm.

In one or more embodiments, the challenge response comprises a one-way encoded signal encoded using an encoding scheme, and the processor is configured to generate a one-way encoded master signal using the same encoding scheme, and to compare the received one-way encoded signal with a one-way encoded master signal. The one-way encoding scheme may comprise a hashing algorithm.

In one or more embodiments, the processor is configured to control the transmitter to transmit the resynchronization signal to the slave device for the resynchronization of the slave clock as the further transmitted signal after the further authentication. Hence, in this embodiment, only after the failure of the initial authentication and success of the further authentication, is the resynchronization signal sent to the slave device.

In one or more embodiments, the device can comprise a portable emergency device for use in a security system.

In one or more embodiments, a slave device and method for use with a master device (as described above) comprises a transmitter, a receiver, a slave clock, and a processor. The processor is configured to, upon a first receipt of a triggering-input by the receiver, control the transmitter to transmit a signal to a master device to request that the master device perform an operation, wherein the signal includes a component based on the slave clock for authentication of the slave device. During a time window, a challenge signal is listened for to trigger resynchronization, and if the challenge signal is received by the receiver during the time window, the transmitter is controlled to transmit a challenge response to the master device. The receiver is controlled to receive a resynchronization signal based on a master clock of the master device from the master device in response to the challenge response, and the slave clock is resynchronized using the resynchronization signal. The resynchronization signal is received either as part of the challenge signal, or as a further received signal from the master device, and either the challenge response includes a component to request the second device to perform an operation, or the transmitter is controlled to transmit a further transmitted signal to the master device including a component to request the master device to perform an operation.

In one or more embodiments, if the signal is authenticated or the further authentication process is successful, the processor is configured to control the receiver to receive an acknowledgement signal from the master device. This avoids the slave device not knowing whether their request for an operation to be performed by the master device has been received and carried out.

In one or more embodiments, the acknowledgement signal includes a resynchronization signal based on the master clock for the resynchronization of the slave clock. Hence, even if the slave device is authenticated, it will receive an updated clock signal enabling the updating of the slave clock. Part of the authentication of the signal from the slave device by the master device can be comparing information on the slave clock with information on the master clock and determining whether the slave clock information is within a threshold of the master clock information. The use of some sort of threshold allows for some degree of drift between the slave clock and the master clock before the authentication fails.

In one or more embodiments, the processor is configured to control the transmitter to transmit data to the second device for the performance of the operation based on the signal using the sent data. The transmitted data may be data defining a command to be performed by the master device or a set of data for processing by the master device.

In one or more embodiments, the processor is configured to encrypt the data. The data may be encrypted using a private key of the device, and/or encrypted the data using a public key of the second device. This additional authentication process provides a further level of security for the authentication using a digital certificate.

In one or more embodiments, the processor is configured to control the transmitter to transmit the data in the signal to the master device. Hence, the signal from the slave device used for authentication can also carry the data to avoid the need for further communications. If the slave device is authenticated, the master device can perform the operation using the already received data. If the slave device is not authenticated, either the data can be discarded in favor of data later transmitted to the master device, or the data can be saved to await the further authentication of the slave device.

In one or more embodiments, the processor is configured to control the transmitter to transmit the data after the challenge response to the master device, wherein the further transmitted signal is separate to and after the challenge response. Hence, in this embodiment, the authentication request signal is sent initially, and the data sent separately in a later communication after a successful further authentication based on the challenge and challenge response. In one or more embodiments, the later communication is authenticated to avoid a possibility that the further communication has come from an unauthorized source. This authentication can be by way of receipt of the communication within a short, predetermined window of time e.g. 1 second after the further authentication process completion. Alternatively, or in addition, the further transmitted signal transmitted from the slave device includes a component based on the slave clock of the slave device for authentication by comparing the component with the master signal or master clock. Hence, this process is similar to the initial authentication process. In an alternative embodiment, authentication could be based on a shared secret between the master and slave devices. This can be based on the generation and transmission of a random number by the master device, the hashing of the random number and returning of the hashed random number to the master device by the slave device, and the use of the same hash by the master device to recover the random number and compare it with the generated random number for authentication. In this example the shared secret is the hashing algorithm. An alternative shared secret could be any calculation or equation performed by each device on a random number generated by the master device or a clock signal e.g. the master clock signal.

In one or more embodiments, the processor is configured to control the transmitter to transmit the data in the challenge response, wherein the challenge response comprises the further transmitted signal. Hence, in this embodiment, the need for a further communication is avoided by including the data in the challenge response. If the challenge is successful, the master device can use the data received in the challenge for the performance of the operation.

In one or more embodiments, the master signal is unique to the master device. This can be because each master device has a unique clock signal based on a particular start time e.g. when the device was started, or a unique start time set in manufacture.

In one or more embodiments, the processor is configured to implement a counter based on the slave clock to generate a slave count, wherein the component is based on the slave count for the authentication of the signal at the master device by comparing the component with a count of a counter based on the master clock. Hence, a counter, separate to the clock, but running based on the clock, can be used as the basis for the synchronization of the slave and the master devices. Hence, the authentication can be based simply on a comparison of the counter values.

In one or more embodiments, the processor is configured to encrypt the component transmitted to the master device. This provides an additional level of security by preventing access to the slave signal value in the component. The component may be signed using a private key of the slave device, and/or encrypted using a public key of the master device.

Alternatively, the component may be encoded using an encoding scheme, for decoding by the master device using the same one-way encoding scheme and the authentication of the signal by comparing the encoded component with the encoded master signal. The one-way encoding scheme may comprise a hashing algorithm.

In one or more embodiments, the processor is configured to generate the challenge response as a one-way encoded signal encoded using an encoding scheme, for decoding by the master device using the same encoding scheme, and comparison with a one-way encoded master signal. The one-way encoding scheme may comprise a hashing algorithm.

In one or more embodiments, the slave device includes a battery for powering the slave clock, transmitter, receiver and the processor.

In one or more embodiments, the slave device includes a user-input transducer, and the triggering-input is based on an output of the user-input transducer. The user-input transducer may be a button or a touch sensitive input.

In one or more embodiments, the processor is configured to, in response to receiving the trigger, wake the slave device from a power saving mode to transmit the signal. Hence, the slave device can conserve battery power by staying in a low power mode until activated by the activation of the user-input transducer.

In one or more embodiments, the processor is configured to control the slave device to enter the power saving mode upon conclusion of the time window with no challenge signal being received, or after resynchronization of the slave clock and the transmission of the challenge response or the transmission of the further transmitted signal to the master device.

In one or more embodiments, the device can comprise a key fob.

In one or more embodiments, a system comprises a master device as described above and at least one slave device as described above.

Specific embodiments will now be described with reference to the drawings.

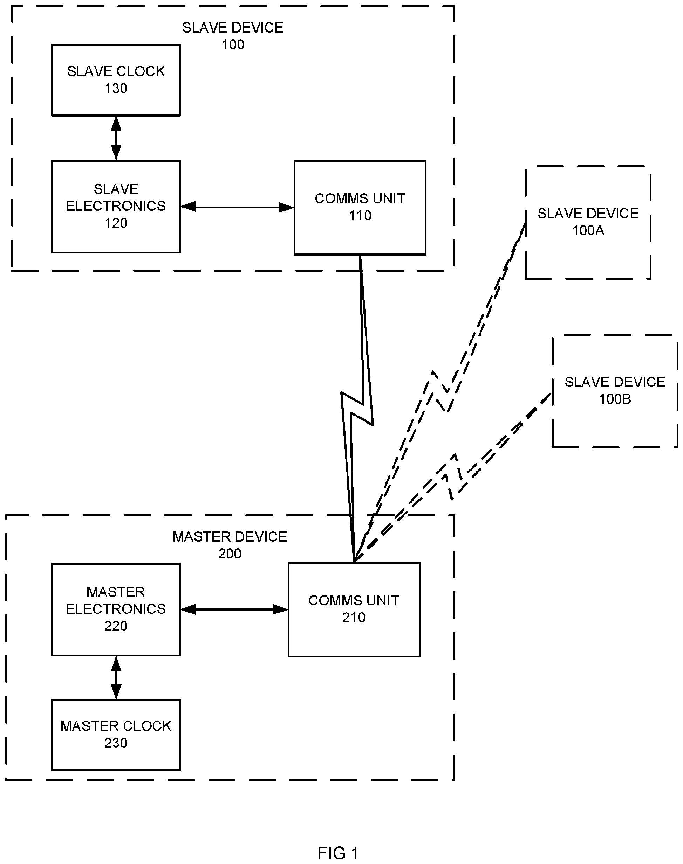

Figure 1 is a schematic diagram illustrating a system in accordance with embodiments. The system comprises a master device 200 wirelessly connected to one or more slave devices 100, 100A and 100B. In this example three slave devices are illustrated. Any number can be used in wireless communication with the master device 200.

The master device 200 comprises a communications unit 210 for wireless communication with one or more slave devices 100, 100A, 100B and receipt of data from one or more slave devices 100, 100A, 100B. The master device 200 includes master electronics 220 for performing various functions of the master device including the generation of the data for transmission to one or more slave devices 100, 100A, 100B and the processing of data or commands received from one or more slave devices 100, 100A, 100B. A master clock 230 is provided in the master device 200 for use in the authentication of the slave devices 100, 100A and 100B.

A slave device 100 comprises a communications unit 110 for wireless communication with the master devices 200. The slave device 100 includes slave electronics 120 for performing various functions of the slave device including the generation of the data and commands for transmission to the master device 200. A slave clock 130 is provided in the slave device 100 for use in authentication of the slave device 100 with the master device 200. The timing of the slave clock 130 can drift relative to the master clock 230 and hence a resynchronizing of the slave clock 130 is required periodically in order for the slave clock 130 to synchronize to the master clock 230.

The slave clock 130 and the master clock 230 can provide a time signal that is not a time synchronized with any external time e.g. UTC time but is instead a time based on a start time of the master clock 230. The slave clock 130 and the master clock 230 can also control respective counters to count time as a count number and hence a time comparison for authentication of the slave device 100 by the master device 200 is based on a comparison of signals based on the counter values.

The master electronics 220 can be analogue or digital electronics or a combination of analogue and digital electronics. The digital electronics can be performed at least in part by a processor or microprocessor suitably programmed and/or otherwise configured. The master device 200 may be battery powered or mains powered.

The slave devices 100, 100A and 100B may comprise the same general components. However, the slave electronics 120 may be the same or different in different slave devices that perform different functions to each other. For example, in a security system, the slave devices may be a key fob. The electronics 120 will however have components in common relating to the authentication of the slave device 100, 100A, 100B with the master device 200.

The slave electronics 120 can be analogue or digital electronics or a combination of analogue and digital electronics. The digital electronics can be performed at least in part by a processor or microprocessor suitably programmed and/or otherwise configured.

The slave devices 100, 100A, 100B can be battery powered and can each operate in at least one low power mode and at least one higher power mode. In one or more embodiments, in a low power mode, a processor and or the slave electronics 120 operates at a low power mode and in a higher power mode, the processor and or the slave electronics 120 operates at a high-power mode. There may be multiple low power modes and one high powered mode, multiple high-power modes and one low powered mode, one low powered mode and one high powered mode, or multiple high-powered mode and multiple low powered modes. Each of the lowered modes may be sleep modes. Each of the high-powered modes may be awake modes. In the embodiments described below, when one slave device 100 performs a resynchronization with a master device and operated in a higher power mode, the other slave devices 100A and 100B can remain in a low power mode. The low power mode can operate merely to maintain the operation of the slave clock.

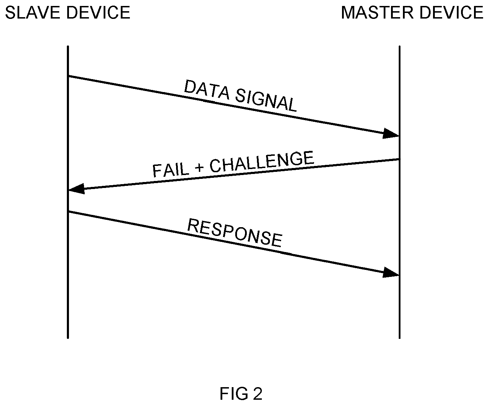

Figure 2 is a schematic diagram illustrating a signal flow diagram in accordance with a first embodiment.

In this embodiment, a slave device 100 initiates a request for an operation to be performed by the master device 200 by the transmission of a data signal. The data signal carries a component based on a slave clock of the remote device for use in authenticating the slave device 100. The component can include a clock value for the current value of the slave clock 130, a counter value for a value of a counter based on the slave clock value, or an encrypted or encoded version of either of these. The signal also includes a command or data to be used by the master device 200 for the performance of the requested operation.

The master device 200 performs an authentication process by comparing the received component with a master signal based on the master clock 230. If the component is encrypted or encoded, it is first decrypted or decoded. If the component includes the clock value this can be compared with the clock value of the master clock 230. If the component is a counter value based on the slave clock 130, this can be compared with a similar counter value generated based on the master clock 230.

The component may be signed with a private key of the slave device and the signing of the component is authenticated using a public key of the slave device, and/or the component may be encrypted with a public key of the master device and the component can be decrypted using a private key of the master device. Alternatively, the component may be one-way encoded using an encoding scheme, and the master clock signal is encoded using the same one-way encoding scheme, and the signal is authenticated by comparing the encoded component with the encoded master clock signal. The one-way encoding scheme can comprise a hashing algorithm.

If the comparison of the component based on the slave clock 130 with a signal based on the master clock 230 determines that the slave clock 130 and the master clock 230 are synchronized to a degree that is within than an acceptable amount, e.g. within a predetermined threshold, the authorization of the slave device 100 succeeds and the master device 200 performs the requested operation. The operation may comprise performing an alarm system arming operation, an alarm system disarming operation, a door or gate opening operation, a door or gate closing operation, a locking or unlocking operation, or triggering any other action or data processing. The operation may additionally or alternatively comprise commanding another device, optionally via a wireless communication, to perform an alarm system arming operation, an alarm system disarming operation, a door or gate opening operation, a door or gate closing operation, a locking or unlocking operation, or trigger any other action or data processing. For example, the operation to be performed by the master device 200, which may be a control hub of an alarm and/or home automation system, to command a mechanically actuated door to open. Such exemplary operations are similarly applicable in respect of operations requested of the master in any other embodiment described herein.

If the comparison of the component based on the slave clock 130 with a signal based on the master clock 230 determines that the slave clock 130 and the master clock 230 are out of synchronization to a degree that is greater than an acceptable amount, e.g. greater than a predetermined threshold, the authorization of the slave device 100 fails and a challenge signal is sent by the master device 200 to the slave device 100.

In this embodiment, the challenge signal is a representation of the master clock and it can be encrypted or encoded in a similar manner to the component or differently encrypted or encoded for additional security. The challenge signal is received and when encrypted or encoded it is decrypted or decoded and a response is generated by the slave device 100 and transmitted to the master device 200. The challenge response can comprise a representation of the slave clock 130 after the slave clock 130 has been resynchronized using the resynchronization signal in the form of the master clock representation.

In this embodiment, the challenge signal also includes a resynchronization signal for the resynchronization of the slave clock 130 for use in the challenge response for further authentication and for use in future transmissions from the slave device 100.

If the slave device is successfully authenticated using the further authentication process, the operation requested in the data signal received initially from the slave device 100 is performed by the master device 200.

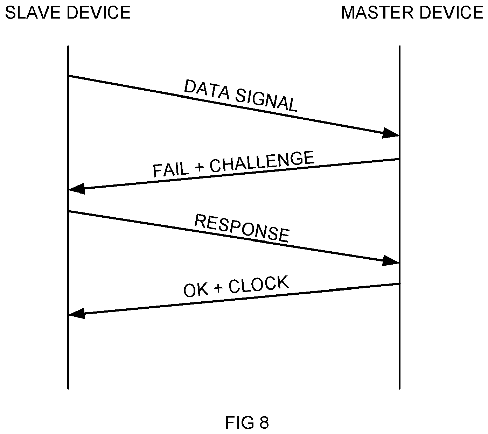

In this embodiment, the minimum number of signal transmissions between the slave device 100 and the master device 200 is used for resynchronization of the slave clock and execution of the required operation by the master device compared with other embodiments described below with reference to figures 8 to 13. The initial data signal includes the request for the operation to be performed by the master device and this is saved by the master device to await the successful further authentication of the slave device 100, rather than requiring the slave device 100 to resend it. Also, the resynchronization signal from the master device 200 to the slave device 100 is included within the challenge signal and hence does not require its own dedicated signal.

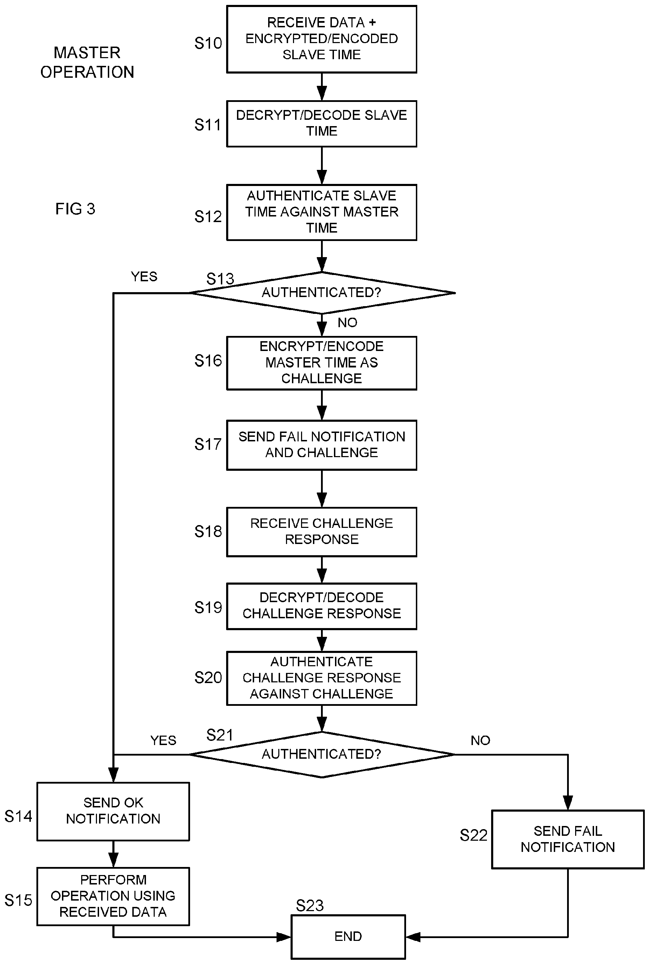

Figure 3 is a flow diagram illustrating details of a method of operation of a master device for the resynchronization of the slave clock in accordance with the first embodiment.

In step S10 the master device 200 receives data for use in performance of an operation at the master device 200 and an encrypted or encoded slave time representation. In step S11 the slave time representation is decrypted or decoded and in step S12 it is compared with a representation of the master time from the master clock 230 to authenticate the slave device. If the slave clock time is determined to be within an allowable range of the master clock time e.g. within a threshold difference, in step S13, the slave device 100 is authenticated and if the slave clock time is determined not to be within an allowable range of the master clock time e.g. not within a threshold difference, in step S13, the slave device 100 is not authenticated.

If the slave device 100 is authenticated in step S13, in step S14 the master device 200 sends the slave device 100 an acknowledgement. This acknowledgement can contain a resynchronization signal to enable the slave device 100to perform a resynchronization of the slave clock 130 to the master clock. If there has been a small drift in the slave clock 130 relative to the master clock that is within the allowed difference or threshold, this may cause the slave device 100to fail authentication for a future communication with the master device 200. The sending of the resynchronization signal with the acknowledgement signal or in the acknowledgement signal enables small readjustments of the slave clock to be made to reduce the possibility of a future failure to authenticate the slave device 100.

In step S15 the master device 200 then performs the operation required or identified in the data received from the slave device 100. The operation can, for example, comprise a locking or unlocking operation or any other operation on a physical device or the processing of data or any other operation described herein. In step S23 the process ends.

If the slave device 100 is not authenticated in step S13, in step S16 the master clock time is encrypted or encoded as a challenge signal and in step S17 this is send with a fail notification to the slave device 100. The master device 200 then waits for receipt of a challenge response and when this is received in step S18, it is decrypted or decoded in step S19 for authentication against the challenge in step S20. In this embodiment the challenge is the encrypted or encoded master time and the challenge response is the encrypted or encoded slave time. Since the slave device 100 received the resynchronization signal and hence has been able to resynchronize the slave clock 130, the challenge response can include a slave clock time signal that should match the master clock time signal so that the slave device can pass this further authentication step as determined in step S21.

If the further authentication process fails in step S21, i.e. the slave clock 130 still does not match the master clock 230, to within a defined error or threshold difference, in step S22, a fail notification is sent to the slave device 100.

If the further authentication process succeeds in step S21, i.e. the slave clock 130 matches the master clock 230, to within a defined error or threshold difference, the process proceeds to step S14 where the master device 200 sends the slave device 100 an acknowledgement. This acknowledgement can contain a resynchronization signal to enable the slave device 100 to perform a resynchronization of the slave clock 130 to the master clock. If there has been a small drift in the slave clock 130 relative to the master clock that is within the allowed difference or threshold, this may cause the slave device 100to fail authentication for a future communication with the master device 200. The sending of the resynchronization signal with the acknowledgement signal or in the acknowledgement signal enables small readjustments of the slave clock to be made to reduce the possibility of a future failure to authenticate the slave device 100.

In step S 15 the master device 200 then performs the operation required or identified in the data received from the slave device 100. The operation can, for example, comprise a locking or unlocking operation or any other operation on a physical device or the processing of data or any other operation described herein. In step S23 the process ends.

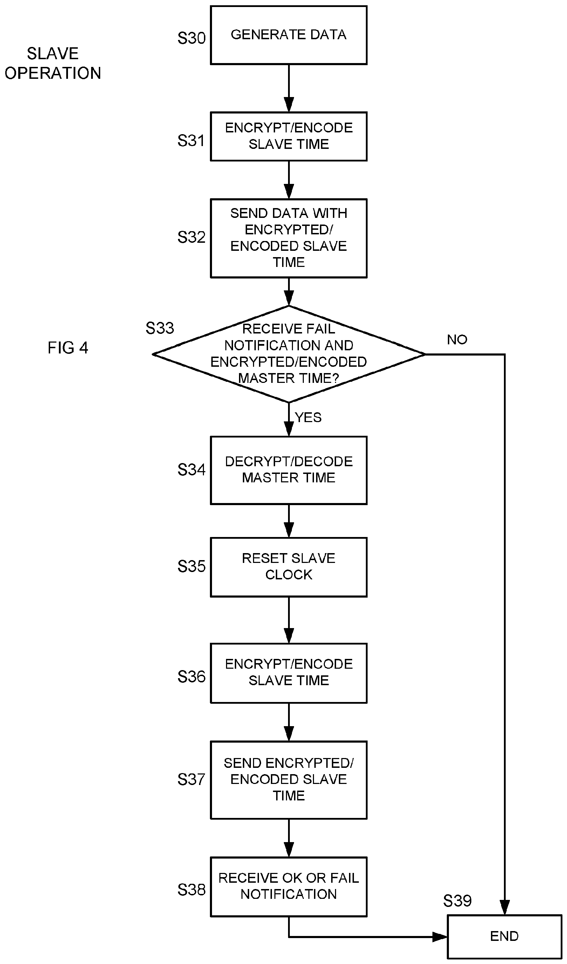

Figure 4 is a flow diagram illustrating a method of operation of a slave device for the resynchronization of the slave clock in accordance with the first embodiment.

The process can be initiated by a user pressing a button on the slave device 100. The slave device 100 can comprise a key fob for example. Hence, in step S30 the slave device 100 generates data. The data can comprise any form of data for processing by the master device 200 or a command for an operation to be performed by the master device 200. In step S31 the slave time from the slave clock 130 is encrypted or encoded and in step S32 the data is sent with the encrypted or encoded slave time to the master device 200.

In step S33, the slave device 100 waits for a response from the master device 200 in the form of an acknowledgement or fail notification. If the slave device 100 is authenticated by the master device 200, no fail notification is received in step S33 and the acknowledgement received by the slave device 100 ends the process in step S39. If in step S33 a fail notification is received with an encrypted or encoded master clock time is received, in step S34 master time is decrypted or decoded and in step S35 it is used to resynchronize the slave clock. In step S36 the slave time of the resynchronized slave clock 130 is encrypted or encoded and transmitted to the master device 200 in step S37. In step S38 the slave device 100 receives, from the master device 200, either an acknowledgment to confirm authentication of the slave device 100 or a fail notification and the process ends at step S39.

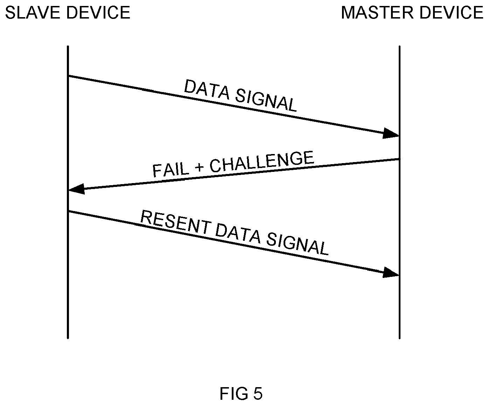

Figure 5 is a schematic diagram illustrating a signal flow diagram in accordance with a second embodiment.

This embodiment differs from the first embodiment in that the data for use as a basis for the performance of an operation at the master device 200 is resent with the challenge response.

In this embodiment, a slave device 100 initiates a request for an operation to be performed by the master device 200 by the transmission of a data signal. The data signal carries a component based on a slave clock of the slave device 100 for use in authenticating the slave device 100. The component can include a clock value for the current value of the slave clock 130, a counter value for a value of a counter based on the slave clock value, or an encrypted or encoded version of either of these. The signal also includes a command or data to be used by the master device 200 for the performance of the requested operation.

The master device 200 performs an authentication process by comparing the received component with a master signal based on the master clock 230. If the component is encrypted or encoded, it is first decrypted or decoded. If the component includes the clock value this can be compared with the clock value of the master clock 230. If the component is a counter value based on the slave clock 130, this can be compared with a similar counter value generated based on the master clock 230.

The component may be signed with a private key of the slave device and the signing of the component is authenticated using a public key of the slave device, and/or the component may be encrypted with a public key of the master device and the component can be decrypted using a private key of the master device. Alternatively, the component may be one-way encoded using an encoding scheme, and the master clock signal is encoded using the same one-way encoding scheme, and the signal is authenticated by comparing the encoded component with the encoded master clock signal. The one-way encoding scheme can comprise a hashing algorithm.

If the comparison of the component based on the slave clock 130 with a signal based on the master clock 230 determines that the slave clock 130 and the master clock 230 are synchronized to a degree that is within than an acceptable amount, e.g. within a predetermined threshold, the authorization of the slave device 100 succeeds and the master device 200 performs the requested operation. The operation may comprise performing a locking or unlocking operation, or triggering any other action or data processing or any other operation described herein.

If the comparison of the component based on the slave clock 130 with a signal based on the master clock 230 determines that the slave clock 130 and the master clock 230 are out of synchronization to a degree that is greater than an acceptable amount, e.g. greater than a predetermined threshold, the authorization of the slave device 100 fails and a challenge signal is sent by the master device 200 to the slave device 100.

In this embodiment, the challenge signal is a representation of the master clock and it can be encrypted or encoded in a similar manner to the component or differently encrypted or encoded for additional security. The challenge signal is received and when encrypted or encoded it is decrypted or decoded and a response is generated by the slave device 100and transmitted to the master device 200. The challenge response can comprise a representation of the slave clock 130 after the slave clock 130 has been resynchronized using the resynchronization signal in the form of the master clock representation. In this embodiment, the challenge response also includes the data signal resent to the master device 200.

In this embodiment, the challenge signal also includes a resynchronization signal for the resynchronization of the slave clock 130 for use in the challenge response for further authentication and for use in future transmissions from the slave device 100.

If the slave device is successfully authenticated using the further authentication process, the operation requested in the data signal received with the challenge response from the slave device 100 is performed by the master device 200.

In this embodiment, the minimum number of signal transmissions between the slave device 100 and the master device 200 is used for resynchronization of the slave clock and execution of the required operation by the master device compared with other embodiments described below with reference to figures 8 to 13. The initial data signal including the request for the operation is not saved by the master device to await the successful further authentication of the slave device 100. Instead the slave device 100 resends it with the challenge response. Also, the resynchronization signal from the master device 200 to the slave device 100 is included within the challenge signal and hence does not require its own dedicated signal.

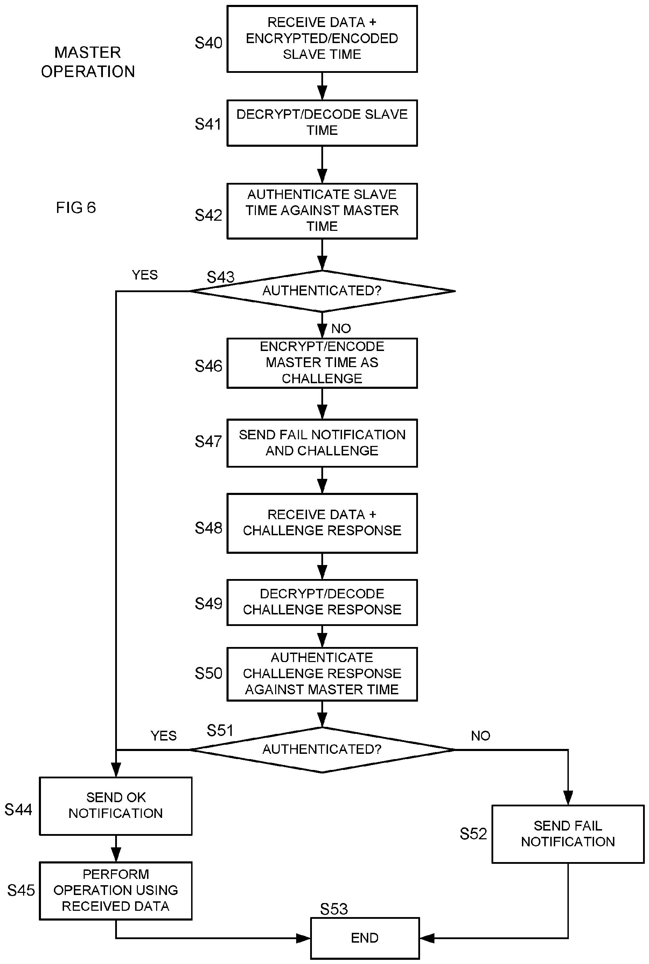

Figure 6 is a flow diagram illustrating details of a method of operation of a master device for the resynchronization of the slave clock in accordance with the second embodiment.

In step S40 the master device 200 receives data for use in performance of an operation at the master device 200 and an encrypted or encoded slave time representation. In step S41 the slave time representation is decrypted or decoded and in step S42 it is compared with a representation of the master time from the master clock 230 to authenticate the slave device. If the slave clock time is determined to be within an allowable range of the master clock time e.g. within a threshold difference, in step S43, the slave device 100is authenticated and if the slave clock time is determined not to be within an allowable range of the master clock time e.g. not within a threshold difference, in step S43, the slave device 100is not authenticated.

If the slave device 100 is authenticated in step S43, in step S44 the master device 200 sends the slave device 100 an acknowledgement. This acknowledgement can contain a resynchronization signal to enable the slave device 100to perform a resynchronization of the slave clock 130 to the master clock. If there has been a small drift in the slave clock 130 relative to the master clock that is within the allowed difference or threshold, this may cause the slave device 100 to fail authentication for a future communication with the master device 200. The sending of the resynchronization signal with the acknowledgement signal or in the acknowledgement signal enables small readjustments of the slave clock to be made to reduce the possibility of a future failure to authenticate the slave device 100.

In step S45 the master device 200 then performs the operation required or identified in the data received from the slave device 100. The operation can, for example, comprise a locking or unlocking operation or any other operation on a physical device or the processing of data or any other operation described herein. In step S53 the process ends.

If the slave device 100 is not authenticated in step S43, in step S46 the master clock time is encrypted or encoded as a challenge signal and in step S47 this is sent with a fail notification to the slave device 100. The master device 200 then waits for receipt of a challenge response and resent data and when this is received in step S48, the challenge response is decrypted or decoded in step S49 for authentication against the challenge in step S60. In this embodiment the challenge is the encrypted or encoded master time and the challenge response is the encrypted or encoded slave time. Since the slave device 100 received the resynchronization signal and hence has been able to resynchronize the slave clock 130, the challenge response can include a slave clock time signal that should match the master clock time signal so that the slave device can pass this further authentication step as determined in step S51.

If the further authentication process fails in step S51, i.e. the slave clock 130 still does not match the master clock 230, to within a defined error or threshold difference, in step S62, a fail notification is sent to the slave device 100.

If the further authentication process succeeds in step S51, i.e. the slave clock 130 matches the master clock 230, to within a defined error or threshold difference, the process proceeds to step S44 where the master device 200 sends the slave device 100an acknowledgement. This acknowledgement can contain a resynchronization signal to enable the slave device 100 to perform a resynchronization of the slave clock 130 to the master clock. If there has been a small drift in the slave clock 130 relative to the master clock that is within the allowed difference or threshold, this may cause the slave device 100 to fail authentication for a future communication with the master device 200. The sending of the resynchronization signal with the acknowledgement signal or in the acknowledgement signal enables small readjustments of the slave clock to be made to reduce the possibility of a future failure to authenticate the slave device 100.

In step S55 the master device 200 then performs the operation required or identified in the resent data received from the slave device 100. The operation can, for example, comprise a locking or unlocking operation or any other operation on a physical device or the processing of data or any other operation described herein. In step S53 the process ends.

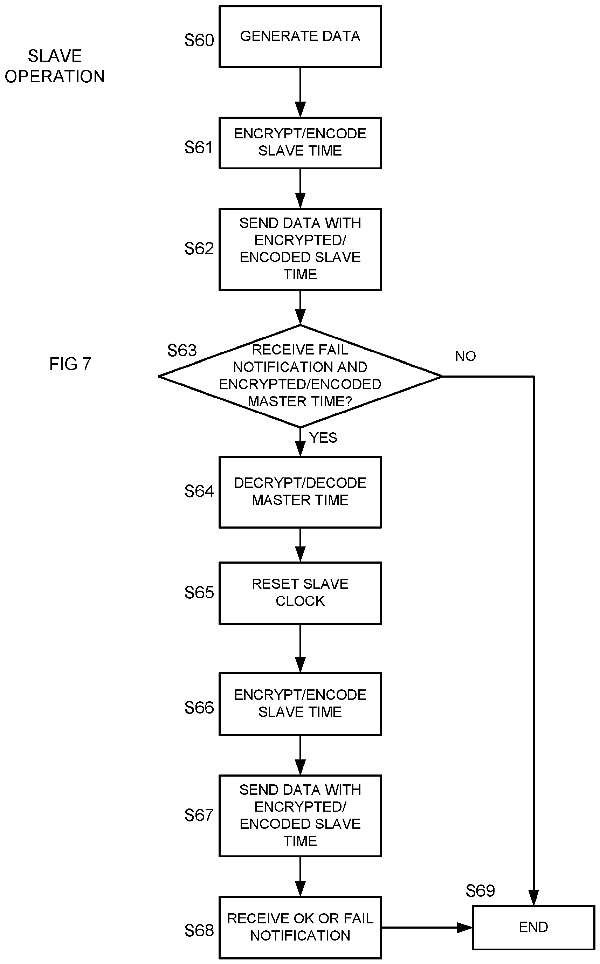

Figure 7 is a flow diagram illustrating a method of operation of a slave device for the resynchronization of the slave clock in accordance with the second embodiment.

The process can be initiated by a user pressing a button on the slave device 100. The slave device 100 can comprise a key fob for example. Hence, in step S60 the slave device 100 generates data. The data can comprise any form of data for processing by the master device 200 or a command for an operation to be performed by the master device 200. In step S61 the slave time from the slave clock 130 is encrypted or encoded and in step S62 the data is sent with the encrypted or encoded slave time to the master device 200.

In step S63, the slave device 100 waits for a response from the master device 200 in the form of an acknowledgement or fail notification. If the slave device 100 is authenticated by the master device 200, no fail notification is received in step S63 and the acknowledgement received by the slave device 100 ends the process in step S69. If in step S63 a fail notification is received with an encrypted or encoded master clock time is received, in step S64 master time is decrypted or decoded and in step S65 it is used to rest the slave clock. In step S66 the slave time of the resynchronized slave clock 130 is encrypted or encoded and transmitted to the master device 200 in step S67 with a resent copy of the data. In step S68 the slave device 100 receives, from the master device 200, either an acknowledgment to confirm authentication of the slave device 100 or a fail notification and the process ends at step S69.

Figure 8 is a schematic diagram illustrating a signal flow diagram in accordance with a third embodiment.

This embodiment is similar to the first embodiment in that the data signal from the slave device 100 is stored or retained by the master device 200 to await a successful further authentication of the slave device 100, rather than requiring a resending of the data by the slave device 100. This embodiment differs from the first embodiment in that the resynchronization signal from the master device 200 is not sent as part of the challenge and is instead sent as a further transmitted signal after successful further authentication of the slave device 100.

In this embodiment, a slave device 100 initiates a request for an operation to be performed by the master device 200 by the transmission of a data signal. The data signal carries a component based on a slave clock of the remote device for use in authenticating the slave device 100. The component can include a clock value for the current value of the slave clock 130, a counter value for a value of a counter based on the slave clock value, or an encrypted or encoded version of either of these. The signal also includes a command or data to be used by the master device 200 for the performance of the requested operation.

The master device 200 performs an authentication process by comparing the received component with a master signal based on the master clock 230. If the component is encrypted or encoded, it is first decrypted or decoded. If the component includes the clock value this can be compared with the clock value of the master clock 230. If the component is a counter value based on the slave clock 130, this can be compared with a similar counter value generated based on the master clock 230.

The component may be signed with a private key of the slave device and the signing of the component is authenticated using a public key of the slave device, and/or the component may be encrypted with a public key of the master device and the component can be decrypted using a private key of the master device. Alternatively, the component may be one-way encoded using an encoding scheme, and the master clock signal is encoded using the same one-way encoding scheme, and the signal is authenticated by comparing the encoded component with the encoded master clock signal. The one-way encoding scheme can comprise a hashing algorithm.

If the comparison of the component based on the slave clock 130 with a signal based on the master clock 230 determines that the slave clock 130 and the master clock 230 are synchronized to a degree that is within than an acceptable amount, e.g. within a predetermined threshold, the authorization of the slave device 100 succeeds and the master device 200 performs the requested operation. The operation may comprise performing a locking or unlocking operation, or triggering any other action or data processing or any other operation described herein.

If the comparison of the component based on the slave clock 130 with a signal based on the master clock 230 determines that the slave clock 130 and the master clock 230 are out of synchronization to a degree that is greater than an acceptable amount, e.g. greater than a predetermined threshold, the authorization of the slave device 100 fails and a challenge signal is sent by the master device 200 to the slave device 100.

In this embodiment, the challenge signal can comprise a 32 or 64 bit random number. This can be encrypted or encoded. A challenge response is received from the slave device 100 and a further authentication process is performed based on the challenge response and the challenge. This authentication could be based on a shared secret between the master and slave devices. This can be based on the generation and sending of a random number by the master device, the hashing of the random number and returning of the hashed random number to the master device by the slave device, and the use of the same hash by the master device to recover the random number and compare it with the generated random number for authentication. In this example the shared secret is the hashing algorithm. An alternative shared secret could be any calculation or equation performed by each device on a random number generated by the master device or a clock signal e.g. the master clock signal.

If the slave device 100 is successfully authenticate using the further authentication process, an acknowledgement signal is sent by the master device 200 to the slave device 100 together with a resynchronization signal for use by the slave device 100 in the resynchronization of the slave clock 130 to the master clock 230. Also, the master device performs the operation requested in the data signal received initially from the slave device 100.

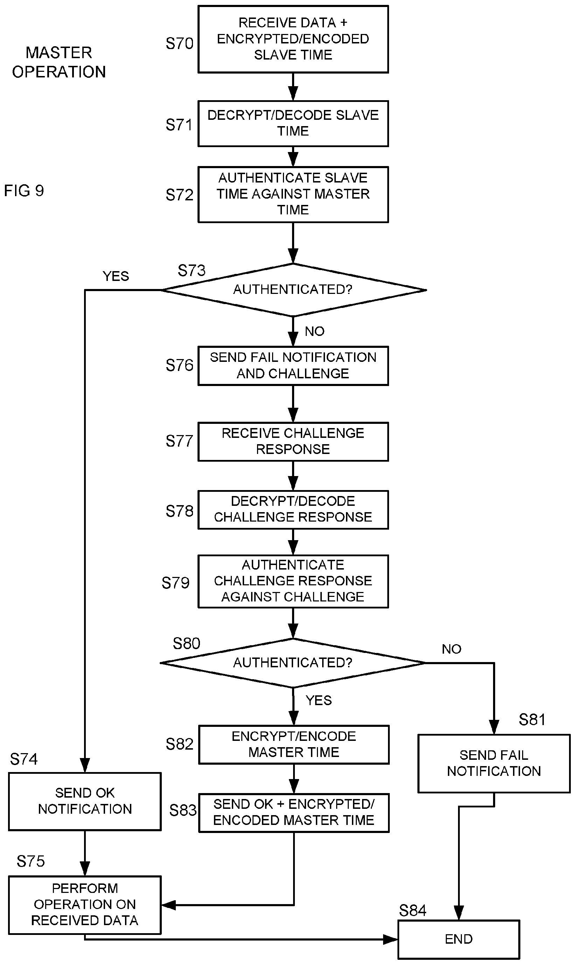

Figure 9 is a flow diagram illustrating details of a method of operation of a master device for the resynchronization of the slave clock in accordance with the third embodiment.

In step S70 the master device 200 receives data for use in performance of an operation at the master device 200 and an encrypted or encoded slave time representation. In step S71 the slave time representation is decrypted or decoded and in step S72 it is compared with a representation of the master time from the master clock 230 to authenticate the slave device. If the slave clock time is determined to be within an allowable range of the master clock time e.g. within a threshold difference, in step S73, the slave device 100 is authenticated and if the slave clock time is determined not to be within an allowable range of the master clock time e.g. not within a threshold difference, in step S73, the slave device 100 is not authenticated.

If the slave device 100 is authenticated in step S73, in step S74 the master device 200 sends the slave device 100, 100A and 100B an acknowledgement. This acknowledgement can contain a resynchronization signal to enable the slave device 100 to perform a resynchronization of the slave clock 130 to the master clock. If there has been a small drift in the slave clock 130 relative to the master clock that is within the allowed difference or threshold, this may cause the slave device 100 to fail authentication for a future communication with the master device 200. The sending of the resynchronization signal with the acknowledgement signal or in the acknowledgement signal enables small readjustments of the slave clock to be made to reduce the possibility of a future failure to authenticate the slave device 100.

In step S75 the master device 200 then performs the operation required or identified in the data received from the slave device 100. The operation can, for example, comprise a locking or unlocking operation or any other operation on a physical device or the processing of data or any other operation described herein. In step S84 the process ends.

If the slave device 100 is not authenticated in step S73, in step S76 a challenge signal is sent with a fail notification to the slave device 100. In one embodiment, the challenge comprises a 32 or 64 bit random number.

The master device 200 then waits for receipt of a challenge response and when this is received in step S77, it is decrypted or decoded in step S78 for authentication against the challenge in step S79. In this embodiment the challenge can be a hash encoding of the random number or an encryption of the random number with a public key of the master device 200. The master device 200 can hence decode the random number using the same hash or decrypt the encrypted random number using the private key of the master device 200 and compare the decoded or decrypted random number with the generated random number.

If the further authentication process fails in step S80, in step S81, a fail notification is sent to the slave device 100 and the process ends at step S84.

If the further authentication process succeeds in step S80, the process proceeds to step S82 where the master device 200 encrypts or encodes the master time and in step S83 sends it to the slave device 100 with an acknowledgement. This enables the slave device 100 to perform a resynchronization of the slave clock 130 to the master clock.

In step S75 the master device 200 then performs the operation required or identified in the data received from the slave device 100. The operation can, for example, comprise a locking or unlocking operation or any other operation on a physical device or the processing of data or any other operation described herein. In step S84 the process ends.

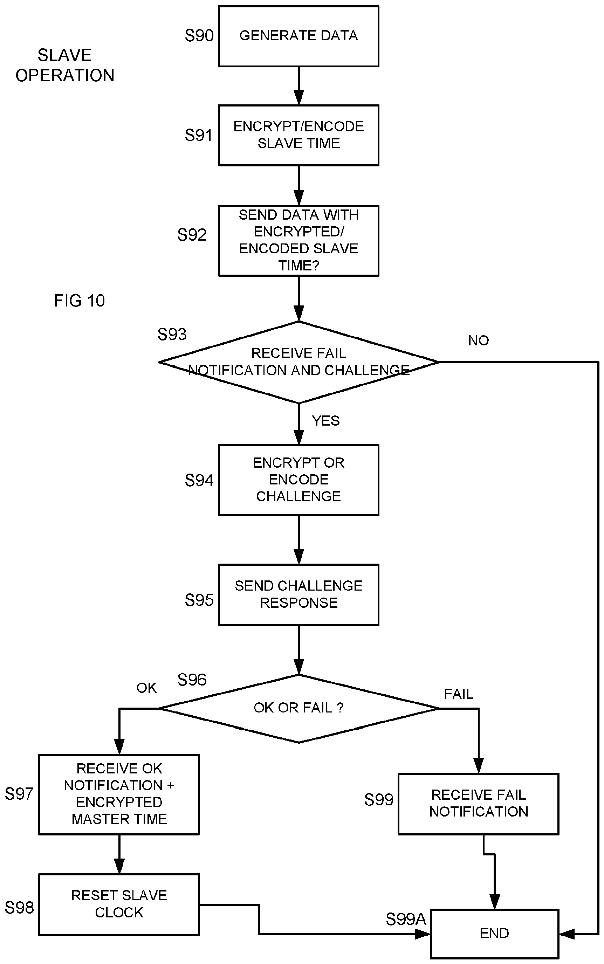

Figure 10 is a flow diagram illustrating a method of operation of a slave device for the resynchronization of the slave clock in accordance with the third embodiment.

The process can be initiated by a user pressing a button on the slave device 100. The slave device 100 can comprise a key fob for example. Hence, in step S90 the slave device 100 generates data. The data can comprise any form of data for processing by the master device 200 or a command for an operation to be performed by the master device 200. In step S91 the slave time from the slave clock 130 is encrypted or encoded and in step S92 the data is sent with the encrypted or encoded slave time to the master device 200.

In step S93, the slave device 100 waits for a response from the master device 200 in the form of an acknowledgement or fail notification. If the slave device 100 is authenticated by the master device 200, no fail notification is received in step S93 and the acknowledgement received by the slave device 100 ends the process in step S99A. If in step S93 a fail notification is received with a challenge, in step S94 a challenge is encrypted or encoded and in step S95 it is transmitted to the master device 200. In one embodiment, the challenge can comprise a random number generated by the master device 200, e.g. a 32 or 64 bit random number. The slave device 100 hash encodes the random number or encrypts the random number with a public key of the master device to generate the challenge response for transmission to the master device 200. In step S96 the slave device 100 receives, from the master device 200, either an acknowledgment to confirm authentication of the slave device 100 or a fail notification. If a fail notification is received in step S99 the process ends in step S99A. If an acknowledgement signal is received, it is received with an encrypted or encoded resynchronization signal in the form of master time in step S97. In step S98 the slave clock is resynchronized to resynchronize it to the master clock and the process ends at step S99A.

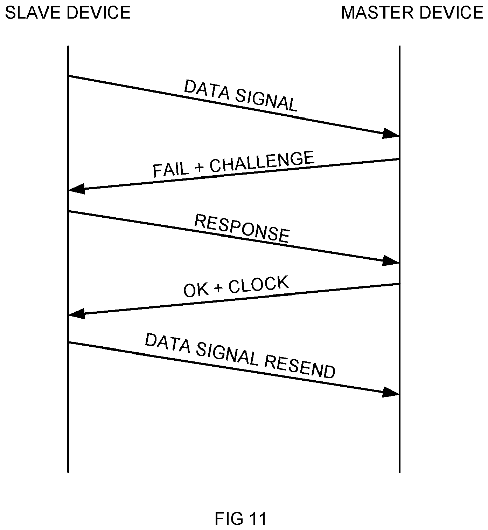

Figure 11 is a schematic diagram illustrating a signal flow diagram in accordance with a fourth embodiment.

This embodiment is similar to the second embodiment in that the data signal from the slave device 100 is not stored or retained by the master device 200 and the data is resent by the slave device 100. This embodiment differs from the second embodiment in that the resynchronization signal from the master device 200 is not sent as part of the challenge and is instead sent as a further transmitted signal transmitted to the slave device 100 after successful further authentication of the slave device 100.

In this embodiment, a slave device 100 initiates a request for an operation to be performed by the master device 200 by the transmission of a data signal. The data signal carries a component based on a slave clock of the remote device for use in authenticating the slave device 100. The component can include a clock value for the current value of the slave clock 130, a counter value for a value of a counter based on the slave clock value, or an encrypted or encoded version of either of these. The signal also includes a command or data to be used by the master device 200 for the performance of the requested operation.

The master device 200 performs an authentication process by comparing the received component with a master signal based on the master clock 230. If the component is encrypted or encoded, it is first decrypted or decoded. If the component includes the clock value this can be compared with the clock value of the master clock 230. If the component is a counter value based on the slave clock 130, this can be compared with a similar counter value generated based on the master clock 230.

The component may be signed with a private key of the slave device and the signing of the component is authenticated using a public key of the slave device, and/or the component may be encrypted with a public key of the master device and the component can be decrypted using a private key of the master device. Alternatively, the component may be one-way encoded using an encoding scheme, and the master clock signal is encoded using the same one-way encoding scheme, and the signal is authenticated by comparing the encoded component with the encoded master clock signal. The one-way encoding scheme can comprise a hashing algorithm.

If the comparison of the component based on the slave clock 130 with a signal based on the master clock 230 determines that the slave clock 130 and the master clock 230 are synchronized to a degree that is within than an acceptable amount, e.g. within a predetermined threshold, the authorization of the slave device 100 succeeds and the master device 200 performs the requested operation. The operation may comprise performing a locking or unlocking operation, or triggering any other action or data processing.

If the comparison of the component based on the slave clock 130 with a signal based on the master clock 230 determines that the slave clock 130 and the master clock 230 are out of synchronization to a degree that is greater than an acceptable amount, e.g. greater than a predetermined threshold, the authorization of the slave device 100 fails and a challenge signal is sent by the master device 200 to the slave device 100.

In this embodiment, the challenge signal can comprise a 32 or 64 bit random number. This can be encrypted or encoded. A challenge response is received from the slave device 100 and a further authentication process is performed based on the challenge response and the challenge. This authentication could be based on a shared secret between the master and slave devices. This can be based on the generation and sending of a random number by the master device, the hashing of the random number and returning of the hashed random number to the master device by the slave device, and the use of the same hash by the master device to recover the random number and compare it with the generated random number for authentication. In this example the shared secret is the hashing algorithm. An alternative shared secret could be any calculation or equation performed by each device on a random number generated by the master device or a clock signal e.g. the master clock signal.

If the slave device 100 is successfully authenticate using the further authentication process, an acknowledgement signal is sent by the master device 200 to the slave device 100 together with a resynchronization signal for use by the slave device 100 in the resynchronization of the slave clock 130 to the master clock 230. The slave device 100 then resends the data to the master device 200 and the master device performs the operation requested in the data signal received from the slave device 100.

Another authentication step can be used for the sending of the data signal. This can comprise the same steps as the initial authentication in that the slave clock will have been resynchronized and hence the data signal can include a signal based on the slave clock for authentication against the master clock. Alternatively, the authentication may be based on a similar process to the challenge authentication step, in that with the OK and clock signal, a challenge can be sent such as a random number generated by the master device. The slave device can hash or encrypt the random number with the public key of the master device and return the hashed or encrypted random number to the master device. The same hash can be used by the master device to recover the random number or the private key of the master device can be used to decrypt the encrypted random number and compare it with the generated random number for authentication. In this example the shared secret is the hashing algorithm or the use of a public/private key pair of the master device. An alternative shared secret could be any calculation or equation performed by each device on a random number generated by the master device or a clock signal e.g. the master clock signal.

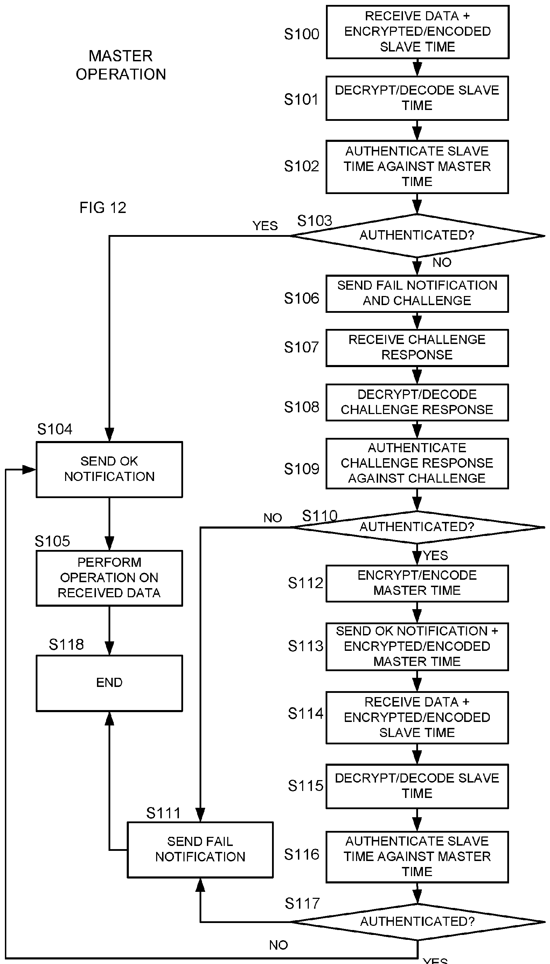

Figure 12 is a flow diagram illustrating details of a method of operation of a master device for the resynchronization of the slave clock in accordance with the fourth embodiment.

In step S100 the master device 200 receives data for use in performance of an operation at the master device 200 and an encrypted or encoded slave time representation. In step S101 the slave time representation is decrypted or decoded and in step S 102 it is compared with a representation of the master time from the master clock 230 to authenticate the slave device. If the slave clock time is determined to be within an allowable range of the master clock time e.g. within a threshold difference, in step S103, the slave device 100 is authenticated and if the slave clock time is determined not to be within an allowable range of the master clock time e.g. not within a threshold difference, in step S 103, the slave device 100, 100A and 100B is not authenticated.

If the slave device 100 is authenticated in step S 103, in step S 104 the master device 200 sends the slave device 100 an acknowledgement.

In step S105 the master device 200 then performs the operation required or identified in the data received from the slave device 100. The operation can, for example, comprise a locking or unlocking operation or any other operation on a physical device or the processing of data or any other operation described herein. In step S 118 the process ends.

If the slave device 100 is not authenticated in step S 103, in step S 106 a challenge signal is sent with a fail notification to the slave device 100. In one embodiment, the challenge can comprise a 32 or 64 bit random number.

The master device 200 then waits for receipt of a challenge response and when this is received in step S 107, it is decrypted or decoded in step S 108 for authentication against the challenge in step S 109. In this embodiment the challenge can be a hash encoding of the random number or an encryption of the random number with a public key of the master device 200. The master device 200 can hence decode the random number using the same hash or decrypt the encrypted random number using the private key of the master device 200 and compare the decoded or decrypted random number with the generated random number.

If the further authentication process fails in step S 110, in step S111, a fail notification is sent to the slave device 100 and the process ends at step S118.

If the further authentication process succeeds in step 5110, the process proceeds to step S 112 where the master device 200 encrypts or encodes the master time and in step S113 sends it to the slave device 100 with an acknowledgement. This enables the slave device 100 to perform a resynchronization of the slave clock 130 to the master clock.

In step S114 the master device receives resent data and an encrypted or encoded slave time from the slave device 100. In step S115 the slave time is decrypted or decoded and in step S116 the slave time is once again authenticated against the master time. If this yet further authentication is successful in step S117, an acknowledgement is sent to the slave device 110 in step S104. In step S115 the master device 200 then performs the operation required or identified in the data received from the slave device 100. The operation can, for example, comprise a locking or unlocking operation or any other operation on a physical device or the processing of data or any other operation described herein. In step S118 the process ends.

If the still further authentication fails in step S117, a fail notification is sent to the slave device in step S111 and the process ends in step S118.

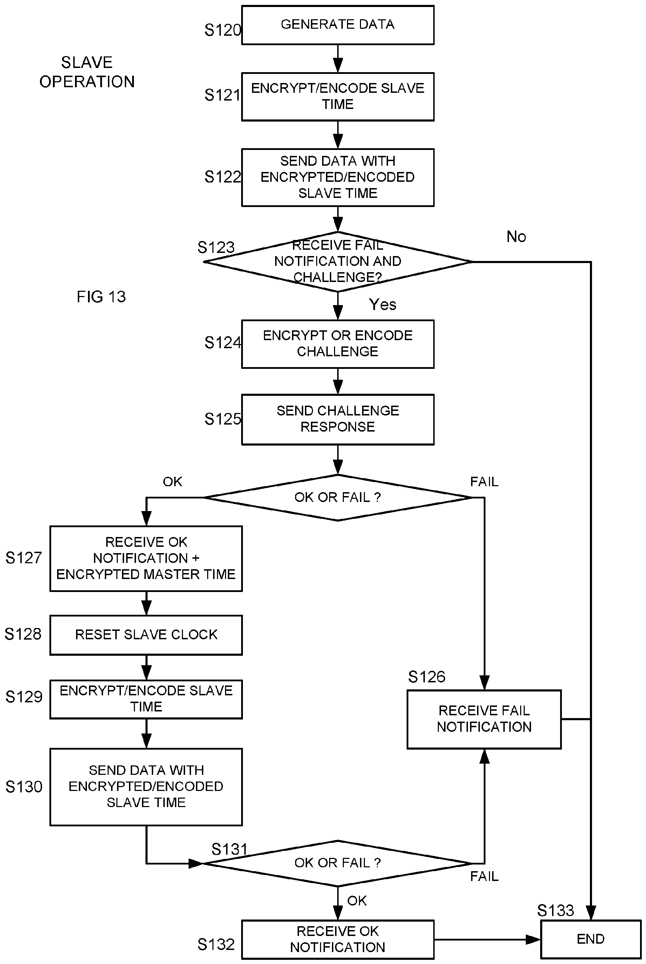

Figure 13 is a flow diagram illustrating a method of operation of a slave device for the resynchronization of the slave clock in accordance with the fourth embodiment.

The process can be initiated by a user pressing a button on the slave device 100, 100A and 100B. The slave device 100 can comprise a key fob for example. Hence, in step 120 the slave device 100 generates data. The data can comprise any form of data for processing by the master device 200 or a command for an operation to be performed by the master device 200. In step S121 the slave time from the slave clock 130 is encrypted or encoded and in step S122 the data is sent with the encrypted or encoded slave time to the master device 200.

In step S 123, the slave device 100 waits for a response from the master device 200 in the form of an acknowledgement or fail notification. If the slave device 100 is authenticated by the master device 200, no fail notification is received in step S123 and the acknowledgement received by the slave device 100 ends the process in step S133. If in step S 123 a fail notification is received with a challenge, in step S124 a challenge is encrypted or encoded and in step S125 it is transmitted to the master device 200. In one embodiment, the challenge can comprise a random number generated by the master device 200, e.g. a 32 or 64 bit random number. The slave device 100 hash encodes the random number or encrypts the random number with a public key of the master device to generate the challenge response for transmission to the master device 200. In step S126 the slave device 100, 100A and 100B receives, from the master device 200, either an acknowledgment to confirm authentication of the slave device 100 or a fail notification. If a fail notification is received in step S 126 the process ends in step S 133. If an acknowledgement signal is received, it is received with an encrypted or encoded resynchronization signal in the form of master time in step S 127. In step S128 the slave clock is resynchronized it to the master clock and in step S129 the resynchronized slave clock time is encrypted or encoded. In step S130 the encrypted or encoded slave time is sent to the master device 200 and the process ends at step S 133.

## Claims

1. A second device (200) comprising:
a receiver (210);
a transmitter (210);
a master clock (230); and
a processor (220) configured to:
control the receiver (210) to receive a signal from a first device (100), the signal including a component based on a slave clock (130) of the first device (100);
authenticate the signal by comparing the component with a master signal, the master signal being based on the master clock (230);
if the signal is authenticated, perform an operation based on the signal; and
if the signal is not authenticated, perform a further authentication process including controlling the transmitter to transmit a challenge signal to the first device (100) and control the receiver (210) to receive a challenge response from the first device (100), and if the further authentication process is successful, perform an operation based on either the signal or a further received signal received from the first device (100);
wherein the processor (220) is configured to control the transmitter (210) to transmit a resynchronization signal based on the master clock (230) to the first device (100) for the resynchronization of the slave clock (130) either as at least a part of the challenge signal or as a further transmitted signal transmitted to the first device (100).

2. A second device (200) according to claim 1, wherein, if the signal is authenticated or the further authentication process is successful, the processor (220) is configured to control the transmitter (210) to transmit an acknowledgement signal to the first device (100), and the acknowledgement signal includes a resynchronization signal based on the master clock (230) for the resynchronization of the slave clock (130).

3. A second device (200) according to claim 1 or claim 2, wherein the processor (220) is configured to control the receiver (210) to receive data from the first device (100), and to perform the operation based on the signal using the received data.

4. A second device (200) according to claim 3, wherein the processor (220) is configured to control the receiver (210) to receive the data in the signal from the first device (100), or
wherein the processor (220) is configured to control the receiver (210) to receive the data after the challenge response from the first device (100), wherein the further received signal is separate to and after the challenge response, or
wherein the processor (220) is configured to control the receiver (210) to receive the data in the challenge response, wherein the challenge response comprises the further received signal.

5. A first device (100) comprising:
a transmitter (110);
a receiver (110);
a slave clock (130); and
a processor (120) configured to:
upon a first receipt of a triggering-input by the receiver (110), control the transmitter (110) to transmit a signal to a second device (200) to request that the second device (200) perform an operation, the signal including a component based on the slave clock (130) for authentication of the first device (100);
during a time window, listening for a challenge signal to trigger resynchronization, and if the challenge signal is received by the receiver (110) during the time window, control the transmitter (110) to transmit a challenge response to the second device (200);
control the receiver (110) to receive a resynchronization signal based on a master clock (230) of the second device (200) from the second device (200) in response to the challenge response; and
resynchronize the slave clock (130) using the resynchronization signal;
wherein the resynchronization signal is received either as part of the challenge signal, or as a further received signal received from the second device (200), and
wherein either the challenge response includes a component to request the second device (200) to perform an operation, or the transmitter (110) is controlled to transmit a further transmitted signal transmitted to the second device (200) including a component to request the second device (200) to perform an operation.

6. A first device (100) according to claim 5, wherein, if the signal is authenticated or the further authentication process is successful, the processor (120) is configured to control the receiver (110) to receive an acknowledgement signal from the second device (200), and the acknowledgement signal includes a resynchronization signal based on the master clock (230) for the resynchronization of the slave clock (130).

7. A first device (100) according to claim 5 or claim 6, wherein the processor (120) is configured to control the transmitter (110) to transmit data to the second device (200) for the performance of the operation based on the signal using the sent data.

8. A first device (100) according to claim 7, wherein the processor (120) is configured to control the transmitter (110) to transmit the data in the signal to the second device (200), or
wherein the processor (120) is configured to control the transmitter (110) to transmit the data after the challenge response to the second device (200), wherein the further transmitted signal is separate to and after the challenge response.

9. A first device (100) according to claim 5, wherein the processor (120) is configured to control the transmitter (110) to transmit the data in the challenge response, wherein the challenge response comprises the further transmitted signal.

10. A method comprising:
controlling a receiver (210) of a second device (200) to receive a signal from a first device (100), the signal including a component based on a slave clock (120) of the first device (100);
authenticating the signal by comparing the component with a master signal, the master signal being based on a master clock (230) of the second device (200);
if the signal is authenticated, performing an operation based on the signal;
if the signal is not authenticated, performing a further authentication process including controlling a transmitter (210) of the second device (200) to transmit a challenge signal to the first device (100) and controlling the receiver (210) of the second device (200) to receive a challenge response from the first device (100), and if the further authentication process is successful, performing an operation based on either the signal, or a further received signal received from the first device (100); and
controlling the transmitter (200) of the second device to transmit a resynchronization signal based on the master clock (230) to the first device (100) for the resynchronization of the slave clock (130) as at least a part of the challenge signal or as a further transmitted signal transmitted to the first device (100).

11. A method according to claim 10, wherein, if the signal is authenticated or the further authentication process is successful, the transmitter (210) of the second device (200) is controlled to transmit an acknowledgement signal to the first device (100).

12. A method comprising:
upon a first receipt of a triggering-input, control a transmitter (110) of a first device (100) to transmit a signal to a second device (200) to request that the second device(200) perform an operation, the signal including a component based on a slave clock (130) of the first device (100) for authentication of the first device (100);
during a time window, listening for a challenge signal to trigger resynchronization, and if the challenge signal is received during the time window, controlling the transmitter (110) of the first device (100) to transmit a challenge response to the second device (200);
controlling a receiver (110) of the first device (100) to receive a resynchronization signal based on a master clock (230) of the second device (200) from the second device (200) in response to the challenge response; and
resynchronizing the slave clock (130) using the resynchronization signal;
wherein the resynchronization signal is received either as part of the challenge signal, or as a further received signal received from the second device (200), and
wherein either the challenge response includes a component to request the second device (200) to perform an operation, or the transmitter (210) of the first device (100) is controlled to transmit a further transmitted signal including a component to request the second device (200) to perform an operation.

13. A method according to claim 12, wherein the method includes controlling the transmitter (110) of the first device (100) to transmit data to the second device (200) for the performance of the operation based on the signal using the sent data.

14. A method according to claim 13, wherein the method includes controlling the transmitter (110) of the first device (100) to transmit the data in the challenge response, wherein the challenge response comprises the further transmitted signal.

15. A carrier medium carrying processor implementable code, which, when executed by a processor, causes the processor to implement the method of any one of claims 10 to 14.

## Patentansprüche

1. Eine zweite Vorrichtung (200), die Folgendes beinhaltet:
einen Empfänger (210);
einen Sender (210);
einen Haupttaktgeber (230); und
einen Prozessor (220), der für Folgendes konfiguriert ist:
Steuern des Empfängers (210), um ein Signal von einer ersten Vorrichtung (100) zu empfangen, wobei das Signal eine Komponente umfasst, die auf einem Nebentaktgeber (130) der ersten Vorrichtung (100) basiert;
Authentifizieren des Signals durch Vergleichen der Komponente mit einem Hauptsignal, wobei das Hauptsignal auf dem Haupttaktgeber (230) basiert; wenn das Signal authentifiziert wird, Durchführen einer Operation basierend auf dem Signal; und
wenn das Signal nicht authentifiziert wird, Durchführen eines weiteren Authentifizierungsprozesses, umfassend das Steuern des Senders, um ein Challenge-Signal an die erste Vorrichtung (100) zu senden, und Steuern des Empfängers (210), um eine Challenge-Antwort von der ersten Vorrichtung (100) zu empfangen, und wenn der weitere Authentifizierungsprozess erfolgreich ist, Durchführen einer Operation basierend entweder auf dem Signal oder einem weiteren empfangenen Signal, das von der ersten Vorrichtung (100) empfangen wurde;
wobei der Prozessor (220) konfiguriert ist, um den Sender (210) zu steuern, um ein auf dem Haupttaktgeber (230) basierendes Resynchronisationssignal an die erste Vorrichtung (100) für die Resynchronisation des Nebentaktgebers (130) entweder als mindestens ein Teil des Challenge-Signals oder als ein weiteres, an die erste Vorrichtung (100) gesendetes Signal zu senden.

2. Zweite Vorrichtung (200) gemäß Anspruch 1, wobei, wenn das Signal authentifiziert wird oder der weitere Authentifizierungsprozess erfolgreich ist, der Prozessor (220) konfiguriert ist, um den Sender (210) zu steuern, um ein Bestätigungssignal an die erste Vorrichtung (100) zu senden, und das Bestätigungssignal ein Resynchronisationssignal basierend auf dem Haupttaktgeber (230) für die Resynchronisation des Nebentaktgebers (130) umfasst.

3. Zweite Vorrichtung (200) gemäß Anspruch 1 oder Anspruch 2, wobei der Prozessor (220) konfiguriert ist, um den Empfänger (210) zu steuern, um Daten von der ersten Vorrichtung (100) zu empfangen und um die Operation basierend auf dem Signal unter Verwendung der empfangenen Daten durchzuführen.

4. Zweite Vorrichtung (200) gemäß Anspruch 3, wobei der Prozessor (220) konfiguriert ist, um den Empfänger (210) zu steuern, um die Daten in dem Signal von der ersten Vorrichtung (100) zu empfangen, oder
wobei der Prozessor (220) konfiguriert ist, um den Empfänger (210) zu steuern, um die Daten nach der Challenge-Antwort von der ersten Vorrichtung (100) zu empfangen, wobei das weitere empfangene Signal getrennt von und nach der Challenge-Antwort ist, oder
wobei der Prozessor (220) konfiguriert ist, um den Empfänger (210) zu steuern, um die Daten in der Challenge-Antwort zu empfangen, wobei die Challenge-Antwort das weitere empfangene Signal beinhaltet.

5. Eine erste Vorrichtung (100), die Folgendes beinhaltet:
einen Sender (110);
einen Empfänger (110);
einen Nebentaktgeber (130); und
einen Prozessor (120), der für Folgendes konfiguriert ist:
bei einem ersten Empfang eines Triggereingangs durch den Empfänger (110), Steuern des Senders (110), um ein Signal an eine zweite Vorrichtung (200) zu senden, um die zweite Vorrichtung (200) aufzufordern, eine Operation durchführt, wobei das Signal eine auf dem Nebentaktgeber (130) basierende Komponente zur Authentifizierung der ersten Vorrichtung (100) umfasst;
während eines Zeitfensters Hören auf ein Challenge-Signal, um eine Resynchronisation auszulösen, und wenn das Challenge-Signal von dem Empfänger (110) während des Zeitfensters empfangen wird, Steuern des Senders (110), um eine Challenge-Antwort an die zweite Vorrichtung (200) zu senden;
Steuern des Empfängers (110) zum Empfangen eines auf einem Haupttaktgeber (230) der zweiten Vorrichtung (200) basierenden Resynchronisationssignals von der zweiten Vorrichtung (200) als Reaktion auf die Challenge-Antwort; und
Resynchronisieren des Nebentaktgebers (130) unter Verwendung des Resynchronisationssignals;
wobei das Resynchronisationssignal entweder als Teil des Challenge-Signals oder als ein weiteres empfangenes Signal, das von der zweiten Vorrichtung (200) empfangen wird, empfangen wird, und
wobei entweder die Challenge-Antwort eine Komponente umfasst, um die zweite Vorrichtung (200) aufzufordern, eine Operation durchzuführen, oder der Sender (110) gesteuert wird, um ein weiteres gesendetes Signal zu senden, das an die zweite Vorrichtung (200) gesendet wird und eine Komponente umfasst, um die zweite Vorrichtung (200) aufzufordern, eine Operation durchzuführen.

6. Erste Vorrichtung (100) gemäß Anspruch 5, wobei, wenn das Signal authentifiziert wird oder der weitere Authentifizierungsprozess erfolgreich ist, der Prozessor (120) konfiguriert ist, um den Empfänger (110) zu steuern, um ein Bestätigungssignal von der zweiten Vorrichtung (200) zu empfangen, und das Bestätigungssignal ein Resynchronisationssignal basierend auf dem Haupttaktgeber (230) für die Resynchronisation des Nebentaktgebers (130) umfasst.

7. Erste Vorrichtung (100) gemäß Anspruch 5 oder Anspruch 6, wobei der Prozessor (120) konfiguriert ist, um den Sender (110) zu steuern, um Daten an die zweite Vorrichtung (200) für die Durchführung der Operation basierend auf dem Signal unter Verwendung der übertragenen Daten zu senden.

8. Erste Vorrichtung (100) gemäß Anspruch 7, wobei der Prozessor (120) konfiguriert ist, um den Sender (110) zu steuern, um die Daten in dem Signal an die zweite Vorrichtung (200) zu senden, oder
wobei der Prozessor (120) konfiguriert ist, um den Sender (110) zu steuern, um die Daten nach der Challenge-Antwort an die zweite Vorrichtung (200) zu senden, wobei das weitere gesendete Signal getrennt von und nach der Challenge-Antwort ist.

9. Erste Vorrichtung (100) gemäß Anspruch 5, wobei der Prozessor (120) konfiguriert ist, um den Sender (110) zu steuern, um die Daten in der Challenge-Antwort zu senden, wobei die Challenge-Antwort das weitere gesendete Signal beinhaltet.

10. Ein Verfahren, das Folgendes beinhaltet:
Steuern eines Empfängers (210) einer zweiten Vorrichtung (200), um ein Signal von einer ersten Vorrichtung (100) zu empfangen, wobei das Signal eine Komponente umfasst, die auf einem Nebentaktgeber (120) der ersten Vorrichtung (100) basiert;
Authentifizieren des Signals durch Vergleichen der Komponente mit einem Hauptsignal, wobei das Hauptsignal auf einem Haupttaktgeber (230) der zweiten Vorrichtung (200) basiert;
wenn das Signal authentifiziert wird, Durchführen einer Operation basierend auf dem Signal;
wenn das Signal nicht authentifiziert wird, Durchführen eines weiteren Authentifizierungsprozesses, umfassend das Steuern eines Senders (210) der zweiten Vorrichtung (200), um ein Challenge-Signal an die erste Vorrichtung (100) zu senden, und Steuern des Empfängers (210) der zweiten Vorrichtung (200), um eine Challenge-Antwort von der ersten Vorrichtung (100) zu empfangen, und wenn der weitere Authentifizierungsprozess erfolgreich ist, Durchführen einer Operation basierend entweder auf dem Signal oder einem weiteren empfangenen Signal, das von der ersten Vorrichtung (100) empfangen wurde; und
Steuern des Senders (200) der zweiten Vorrichtung, um ein auf dem Haupttaktgeber (230) basierendes Resynchronisationssignal an die erste Vorrichtung (100) für die Resynchronisation des Nebentaktgebers (130) als mindestens ein Teil des Challenge-Signals oder als ein weiteres, an die erste Vorrichtung (100) gesendetes Signal zu senden.

11. Verfahren gemäß Anspruch 10, wobei, wenn das Signal authentifiziert wird oder der weitere Authentifizierungsprozess erfolgreich ist, der Sender (210) der zweiten Vorrichtung (200) gesteuert wird, um ein Bestätigungssignal an die erste Vorrichtung (100) zu senden.

12. Ein Verfahren, das Folgendes beinhaltet:
bei einem ersten Empfang eines Triggereingangs, Steuern eines Senders (110) einer ersten Vorrichtung (100), um ein Signal an eine zweite Vorrichtung (200) zu senden, um die zweite Vorrichtung (200) aufzufordern, eine Operation durchführt, wobei das Signal eine auf einem Nebentaktgeber (130) der ersten Vorrichtung (100) basierende Komponente zur Authentifizierung der ersten Vorrichtung (100) umfasst;
während eines Zeitfensters Hören auf ein Challenge-Signal, um eine Resynchronisation auszulösen, und wenn das Challenge-Signal während des Zeitfensters empfangen wird, Steuern des Senders (110) der ersten Vorrichtung (100), um eine Challenge-Antwort an die zweite Vorrichtung (200) zu senden;
Steuern eines Empfängers (110) der ersten Vorrichtung (100) zum Empfangen eines auf einem Haupttaktgeber (230) der zweiten Vorrichtung (200) basierenden Resynchronisationssignals von der zweiten Vorrichtung (200) als Reaktion auf die Challenge-Antwort; und
Resynchronisieren des Nebentaktgebers (130) unter Verwendung des Resynchronisationssignals;
wobei das Resynchronisationssignal entweder als Teil des Challenge-Signals oder als ein weiteres empfangenes Signal, das von der zweiten Vorrichtung (200) empfangen wird, empfangen wird, und
wobei entweder die Challenge-Antwort eine Komponente umfasst, um die zweite Vorrichtung (200) aufzufordern, eine Operation durchzuführen, oder der Sender (210) der ersten Vorrichtung (100) gesteuert wird, um ein weiteres gesendetes Signal, das eine Komponente umfasst, um die zweite Vorrichtung (200) aufzufordern, eine Operation durchzuführen, zu senden.

13. Verfahren gemäß Anspruch 12, wobei das Verfahren das Steuern des Senders (110) der ersten Vorrichtung (100), um Daten an die zweite Vorrichtung (200) für die Durchführung der Operation basierend auf dem Signal unter Verwendung der gesendeten Daten zu senden, umfasst.

14. Verfahren gemäß Anspruch 13, wobei das Verfahren das Steuern des Senders (110) der ersten Vorrichtung (100), um die Daten in der Challenge-Antwort zu senden, umfasst, wobei die Challenge-Antwort das weitere gesendete Signal beinhaltet.

15. Ein Trägermedium, das einen prozessorimplementierbaren Code trägt, der, wenn er von einem Prozessor ausgeführt wird, den Prozessor veranlasst, das Verfahren gemäß einem der Ansprüche 10 bis 14 zu implementieren.

## Revendications

1. Un deuxième dispositif (200) comprenant :
un récepteur (210) ;
un émetteur (210) ;
un horloge maîtresse (230) ; et
un processeur (220) configuré pour :
commander au récepteur (210) de recevoir un signal en provenance d'un premier dispositif (100), le signal incluant une composante basée sur une horloge esclave (130) du premier dispositif (100) ;
authentifier le signal par comparaison de la composante à un signal maître, le signal maître étant basé sur l'horloge maîtresse (230) ;
si le signal est authentifié, réaliser une opération sur la base du signal ; et
si le signal n'est pas authentifié, réaliser un processus d'authentification supplémentaire incluant le fait de commander à l'émetteur d'émettre un signal de défi à destination du premier dispositif (100) et de commander au récepteur (210) de recevoir une réponse au défi en provenance du premier dispositif (100), et si le processus d'authentification supplémentaire est réussi, réaliser une opération sur la base soit du signal, soit d'un signal reçu supplémentaire reçu en provenance du premier dispositif (100) ;
dans lequel le processeur (220) est configuré pour commander à l'émetteur (210) d'émettre un signal de resynchronisation basé sur l'horloge maîtresse (230) à destination du premier dispositif (100) pour la resynchronisation de l'horloge esclave (130) soit sous forme de partie au moins du signal de défi, soit sous forme de signal émis supplémentaire émis à destination du premier dispositif (100).

2. Un deuxième dispositif (200) selon la revendication 1, dans lequel, si le signal est authentifié ou le processus d'authentification supplémentaire est réussi, le processeur (220) est configuré pour commander à l'émetteur (210) d'émettre un signal d'accusé de réception à destination du premier dispositif (100), et le signal d'accusé de réception inclut un signal de resynchronisation basé sur l'horloge maîtresse (230) pour la resynchronisation de l'horloge esclave (130).

3. Un deuxième dispositif (200) selon la revendication 1 ou la revendication 2, dans lequel le processeur (220) est configuré pour commander au récepteur (210) de recevoir des données en provenance du premier dispositif (100), et pour réaliser l'opération sur la base du signal en utilisant les données reçues.

4. Un deuxième dispositif (200) selon la revendication 3, dans lequel le processeur (220) est configuré pour commander au récepteur (210) de recevoir les données dans le signal en provenance du premier dispositif (100), ou
dans lequel le processeur (220) est configuré pour commander au récepteur (210) de recevoir les données postérieurement à la réponse au défi en provenance du premier dispositif (100), le signal reçu supplémentaire étant distinct de et postérieur à la réponse au défi, ou
dans lequel le processeur (220) est configuré pour commander au récepteur (210) de recevoir les données dans la réponse au défi, la réponse au défi comprenant le signal reçu supplémentaire.

5. Un premier dispositif (100) comprenant :
un émetteur (110) ;
un récepteur (110) ;
une horloge esclave (130) ; et
un processeur (120) configuré pour :
dès une première réception d'une entrée de déclenchement par le récepteur (110), commander à l'émetteur (110) d'émettre un signal à destination d'un deuxième dispositif (200) pour demander que le deuxième dispositif (200) réalise une opération, le signal incluant une composante basée sur l'horloge esclave (130) pour une authentification du premier dispositif (100) ;
durant une fenêtre temporelle, le fait de guetter un signal de défi pour déclencher une resynchronisation, et si le signal de défi est reçu par le récepteur (110) durant la fenêtre temporelle, commander à l'émetteur (110) d'émettre une réponse au défi à destination du deuxième dispositif (200) ;
commander au récepteur (110) de recevoir un signal de resynchronisation basé sur une horloge maîtresse (230) du deuxième dispositif (200) en provenance du deuxième dispositif (200) en réponse à la réponse au défi ; et
resynchroniser l'horloge esclave (130) en utilisant le signal de resynchronisation ;
dans lequel le signal de resynchronisation est reçu soit sous forme de partie du signal de défi, soit sous forme de signal reçu supplémentaire reçu en provenance du deuxième dispositif (200), et
dans lequel soit la réponse au défi inclut une composante pour demander au deuxième dispositif (200) de réaliser une opération, soit l'émetteur (110) est commandé afin d'émettre un signal émis supplémentaire émis à destination du deuxième dispositif (200) incluant une composante pour demander au deuxième dispositif (200) de réaliser une opération.

6. Un premier dispositif (100) selon la revendication 5, dans lequel, si le signal est authentifié ou le processus d'authentification supplémentaire est réussi, le processeur (120) est configuré pour commander au récepteur (110) de recevoir un signal d'accusé de réception en provenance du deuxième dispositif (200), et le signal d'accusé de réception inclut un signal de resynchronisation basé sur l'horloge maîtresse (230) pour la resynchronisation de l'horloge esclave (130).

7. Un premier dispositif (100) selon la revendication 5 ou la revendication 6, dans lequel le processeur (120) est configuré pour commander à l'émetteur (110) d'émettre des données à destination du deuxième dispositif (200) pour la réalisation de l'opération sur la base du signal en utilisant les données envoyées.

8. Un premier dispositif (100) selon la revendication 7, dans lequel le processeur (120) est configuré pour commander à l'émetteur (110) d'émettre les données dans le signal à destination du deuxième dispositif (200), ou
dans lequel le processeur (120) est configuré pour commander à l'émetteur (110) d'émettre les données postérieurement à la réponse au défi à destination du deuxième dispositif (200), le signal émis supplémentaire étant distinct de et postérieur à la réponse au défi.

9. Un premier dispositif (100) selon la revendication 5, dans lequel le processeur (120) est configuré pour commander à l'émetteur (110) d'émettre les données dans la réponse au défi, la réponse au défi comprenant le signal émis supplémentaire.

10. Un procédé comprenant :
le fait de commander à un récepteur (210) d'un deuxième dispositif (200) de recevoir un signal en provenance d'un premier dispositif (100), le signal incluant une composante basée sur une horloge esclave (120) du premier dispositif (100) ;
le fait d'authentifier le signal par comparaison de la composante à un signal maître, le signal maître étant basé sur une horloge maîtresse (230) du deuxième dispositif (200) ;
si le signal est authentifié, le fait de réaliser une opération sur la base du signal ;
si le signal n'est pas authentifié, le fait de réaliser un processus d'authentification supplémentaire incluant le fait de commander à un émetteur (210) du deuxième dispositif (200) d'émettre un signal de défi à destination du premier dispositif (100) et le fait de commander au récepteur (210) du deuxième dispositif (200) de recevoir une réponse au défi en provenance du premier dispositif (100), et si le processus d'authentification supplémentaire est réussi, le fait de réaliser une opération sur la base soit du signal, soit d'un signal reçu supplémentaire reçu en provenance du premier dispositif (100) ; et
le fait de commander à l'émetteur (200) du deuxième dispositif d'émettre un signal de resynchronisation basé sur l'horloge maîtresse (230) à destination du premier dispositif (100) pour la resynchronisation de l'horloge esclave (130) sous forme de partie au moins du signal de défi ou sous forme de signal émis supplémentaire émis à destination du premier dispositif (100).

11. Un procédé selon la revendication 10, dans lequel, si le signal est authentifié ou le processus d'authentification supplémentaire est réussi, l'émetteur (210) du deuxième dispositif (200) est commandé afin d'émettre un signal d'accusé de réception à destination du premier dispositif (100).

12. Un procédé comprenant :
dès une première réception d'une entrée de déclenchement, commander à un émetteur (110) d'un premier dispositif (100) d'émettre un signal à destination d'un deuxième dispositif (200) pour demander que le deuxième dispositif (200) réalise une opération, le signal incluant une composante basée sur une horloge esclave (130) du premier dispositif (100) pour une authentification du premier dispositif (100) ;
durant une fenêtre temporelle, le fait de guetter un signal de défi pour déclencher une resynchronisation, et si le signal de défi est reçu durant la fenêtre temporelle, le fait de commander à l'émetteur (110) du premier dispositif (100) d'émettre une réponse au défi à destination du deuxième dispositif (200) ;
le fait de commander à un récepteur (110) du premier dispositif (100) de recevoir un signal de resynchronisation basé sur une horloge maîtresse (230) du deuxième dispositif (200) en provenance du deuxième dispositif (200) en réponse à la réponse au défi ; et
le fait de resynchroniser l'horloge esclave (130) en utilisant le signal de resynchronisation ;
dans lequel le signal de resynchronisation est reçu soit sous forme de partie du signal de défi, soit sous forme de signal reçu supplémentaire reçu en provenance du deuxième dispositif (200), et
dans lequel soit la réponse au défi inclut une composante pour demander au deuxième dispositif (200) de réaliser une opération, soit l'émetteur (210) du premier dispositif (100) est commandé afin d'émettre un signal émis supplémentaire incluant une composante pour demander au deuxième dispositif (200) de réaliser une opération.

13. Un procédé selon la revendication 12, le procédé incluant le fait de commander à l'émetteur (110) du premier dispositif (100) d'émettre des données à destination du deuxième dispositif (200) pour la réalisation de l'opération sur la base du signal en utilisant les données envoyées.

14. Un procédé selon la revendication 13, le procédé incluant le fait de commander à l'émetteur (110) du premier dispositif (100) d'émettre les données dans la réponse au défi, la réponse au défi comprenant le signal émis supplémentaire.

15. Un support porteur portant du code pouvant être mis en oeuvre par un processeur, qui, lorsqu'il est exécuté par un processeur, amène le processeur à mettre en oeuvre le procédé de l'une quelconque des revendications 10 à 14.
